# EUROPEAN PATENT APPLICATION

(11) **EP 4 394 145 A1**
(43) Date of publication of application: **03.07.2024**
(21) Application number: 23220761.3
(22) Date of filing: 29.12.2023
(51) Int. Cl.: E04H 4/12

(54) **INTEGRATED POOL PAD EQUIPMENT**

(30) Priority: 29.12.2022 US 202263477798 P
(71) Applicant: Pentair Water Pool and Spa, Inc., Cary, NC 27518 (US)
(72) Inventor: BULGER, Charles, Falcon Heights, MN (US); PAI, Umesh, Apex, NC (US); VAKIL, Neelin, Cary, NC (US); MILLER, James, Sanford, NC (US); TULO, Ajit, Greater Noida, Uttar Pradesh (IN); YADUVENSHI, Bhupendra, Gautam Bhudh Nagar, Uttar Pradesh (IN); MISHRA, Subhasish, Ghaziabad, Uttar Pradesh (IN); GUPTA, Swati, Ghaziabad, Uttar Pradesh (IN); KRISHNANTREY, Pankaj, Noida, Uttar Pradesh (IN); PARIK, Devender, Noida, Uttar Pradesh (IN); JAIN, Anu, Laxmi Nagar, New Delhi (IN); ROLCHIGO, Philip, Excelsior, MN (US)
(74) Representative: Viering, Jentschura & Partner mbB Patent- und Rechtsanwälte

(57) **Abstract**

An integrated pool pad system including a housing, a pump contained within the housing, a filter contained within the housing, and a control unit configured to control operation of the pump is provided. The housing includes an inlet port, an outlet port, and a power distributor. The pump and the filter are in fluid communication with the inlet port and the outlet port. The control unit includes a user interface. The inlet port and the outlet port are in communication with a body of water.

## Description

### BACKGROUND

Pool and spa systems include many different types of equipment in order to keep the pool water clean and comfortable for swimmers. For example, pool and spa systems often include one or more of a pool pad having a pump, a filter, a water chemistry sensor, a chemical dispenser, a salt chlorine generator, and/or a heater. In conventional pool and spa systems, the pool pad has to be custom-built to accommodate different pool environments and to accommodate the specific selection of pool devices to be used with the pool and spa system. This is in part due to the fact that different types of pool and spa equipment are provided as separate devices.

While conventional pool and spa systems provide many benefits, they are also subject to various drawbacks. Accordingly, it would be useful to provide an improved pool pad for a pool and spa system.

### SUMMARY

Some embodiments provide an integrated pool pad system including a housing, a pump contained within the housing, a filter contained within the housing, and a control unit configured to control the operation of the pump. The control unit includes a user interface. The housing includes an inlet port, an outlet port, and a power distributor. The pump and the filter are in fluid communication with the inlet port and the outlet port, which are in communication with a body of water.

In some forms, the integrated pool pad system includes a strainer coupled to the inlet port and a strainer compartment integrated with the housing. The strainer can be separately accessible from the pump and the filter. The integrated pool pad system can include at least one automated valve in communication with the control unit, and the control unit can be designed to open and close the at least one automated valve to backwash the filter. The housing can further include an access panel, which provides access to a power distributor provided in the form of a load center. The inlet port can receive water from one or more bodies of water, and the outlet port can distribute water to the one or more bodies of water. Sound-absorbing panels can be positioned within the housing, and/or the housing can be at least partially recessed into a ground surface. The user interface can be provided on a remote control device. An external pool device can be electrically coupled to the power distributor. The housing can be designed to modularly receive a pool device such that the pool device is fluidly coupled to the inlet port and the outlet port, and the pool device is electrically coupled to the power distributor. The pool device can be one or more of a water chemistry sensor, a chemical dispenser, a heater, or a booster pump. The control unit can provide a suggested operation schedule for the pump based on a category of the pool device. The pool device can include a sensor for sensing one or more physical properties of the fluid flowing through the housing and a chemical dispenser for dispensing one or more chemicals into the fluid flowing through the housing. The sensor can sense one or more of an oxidation-reduction potential value, a pH value, a temperature value, a calcium hardness value, a total alkalinity value, a cyanuric acid value, a total dissolved solids value, a salinity value, a free chlorine value, or a total chlorine value.

Some embodiments provide an integrated water chemistry device including a control unit, an inlet port, an outlet port, a sensor, and a chemical dispensing apparatus. The sensor is fluidly coupled to the inlet port and the outlet port and communicatively coupled to the control unit. The sensor is designed to sense one or more of an oxidation-reduction potential value, a pH value, a temperature value, a calcium hardness value, a total alkalinity value, a cyanuric acid value, a free chlorine value, or a total chlorine value. The chemical dispensing apparatus is fluidly coupled to the inlet port and the outlet port, and the chemical dispensing apparatus is communicatively coupled to the control unit.

In some forms, the filter has a filter housing, which includes the inlet port and the outlet port. The sensor and the chemical dispensing apparatus can be contained within the filter housing and can be joined to one of the inlet port or the outlet port on an outside of the filter housing. The sensor can include a colorimeter configured to measure one or more of the calcium hardness value, the total alkalinity value, the cyanuric acid value, the free chlorine value, or the total chlorine value. The chemical dispensing apparatus can include a chemical brick storage and a chemical brick feeder provided in the form of a multi-channel brick feeding system. Each of a plurality of chemical bricks in the chemical brick storage can include an identification element.

Some embodiments provide a virtual pool pad configurator. The virtual pool pad configurator includes a non-transitory computer-readable medium storing a program causing a computer to display a pool specifications interface configured to receive input from a user regarding specifications of a pool, a pool package interface configured to recommend a plurality of pool pad equipment packages based on the specifications of the pool, and a pool pad customization interface configured to receive input from a user configured to display a plurality of pool pad equipment models based on the specifications of the pool. The virtual pool pad configurator sends a selected pool pad configuration to a manufacturing facility, the manufacturing facility pre-assembles a pool pad system according to the selected pool pad configuration, and the pre-assembled pool pad system is delivered to the user.

### BRIEF DESCRIPTION OF THE DRAWINGS

The accompanying drawings, which are incorporated in and form a part of this specification, illustrate embodiments of the invention and, together with the description, serve to explain the principles of embodiments of the invention:
FIG. 1 is a schematic block diagram of an integrated pool pad system according to an embodiment;
FIG. 2 is a schematic block diagram of an integrated water chemistry device according to an embodiment;
FIG. 3 is a schematic block diagram of a filter and the integrated water chemistry device of FIG. 2 coupled in a first arrangement;
FIG. 4 is a schematic block diagram of a filter and the integrated water chemistry device of FIG. 2 coupled in a second arrangement;
FIG. 5A is an isometric view of a front side and a left side of an integrated pool pad system according to an embodiment;
FIG. 5B is an isometric view of the front side and a right side of the integrated pool pad system of FIG. 5A;
FIG. 5C is an isometric view of a back side and the right side of the integrated pool pad system of FIG. 5A;
FIG. 5D is a top plan view of the integrated pool pad system of FIG. 5A;
FIG. 6A is an isometric view of a front side and a right side of an integrated pool pad system according to an embodiment;
FIG. 6B is an isometric view of the front side and a left side of the integrated pool pad system of FIG. 6A;
FIG. 6C is an isometric view of a back side and the right side of the integrated pool pad system of FIG. 6A;
FIG. 6D is a top plan view of the integrated pool pad system of FIG. 6A;
FIG. 6E is a piping and instrumentation diagram of the integrated pool pad system of FIG. 6A;
FIG. 7A is an isometric view of a front side and a right side of an integrated pool pad system according to an embodiment;
FIG. 7B is an isometric view of the front side and a left side of the integrated pool pad system of FIG. 7A;
FIG. 7C is an isometric view of a back side and the right side of the integrated pool pad system of FIG. 7A;
FIG. 7D is a top plan view of the integrated pool pad system of FIG. 7A;
FIG. 7E is a piping and instrumentation diagram of the integrated pool pad system of FIG. 7A;
FIG. 8A is an isometric view of an integrated pool pad system according to an embodiment with some parts rendered transparently for clarity;
FIG. 8B is an exploded view of the integrated pool pad system of FIG. 8A with some parts removed and some parts rendered transparently for clarity;
FIG. 8C is an isometric view of an inner housing of the integrated pool pad system of FIG. 8A with some parts rendered transparently for clarity;
FIG. 8D is a top plan view of the inner housing of FIG. 8C;
FIG. 9A is a schematic representation of a pool specifications interface of a virtual pool pad configurator according to an embodiment;
FIG. 9B is a schematic representation of a pool package interface of the virtual pool pad configurator according to an embodiment; and
FIG. 9C is a schematic representation of a pool pad customization interface of the virtual pool pad configurator according to an embodiment.

### DETAILED DESCRIPTION

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to embodiments shown but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives and fall within the scope of embodiments of the invention.

Before any embodiments of the invention are explained in detail, it is to be understood that the invention is not limited in its application to the details of construction and the arrangement of components set forth in the following description or illustrated in the attached drawings. The invention is capable of other embodiments and of being practiced or of being carried out in various ways. Also, it is to be understood that the phraseology and terminology used herein are for the purpose of description and should not be regarded as limiting. For example, the use of "including," "comprising," or "having" and variations thereof herein is meant to encompass the items listed thereafter and equivalents thereof, as well as additional items.

As used herein, unless otherwise specified or limited, the terms "mounted," "connected," "supported," and "coupled" and variations thereof are used broadly and encompass both direct and indirect mountings, connections, supports, and couplings. Further, unless otherwise specified or limited, "connected" and "coupled" are not restricted to physical or mechanical connections or couplings.

As used herein, unless otherwise specified or limited, "at least one of A, B, and C," and similar other phrases, are meant to indicate A, or B, or C, or any combination of A, B, and/or C. As such, this phrase, and similar other phrases can include single or multiple instances of A, B, and/or C, and, in the case that any of A, B, and/or C indicates a category of elements, single or multiple instances of any of the elements of the categories A, B, and/or C.

As explained above, it would be useful to provide an improved pool pad for a pool and spa system. Accordingly, in order to consolidate equipment, reduce installation effort, and increase system modularity, an integrated pool pad system can be provided. Also, in some embodiments, an integrated water chemistry device can be provided.

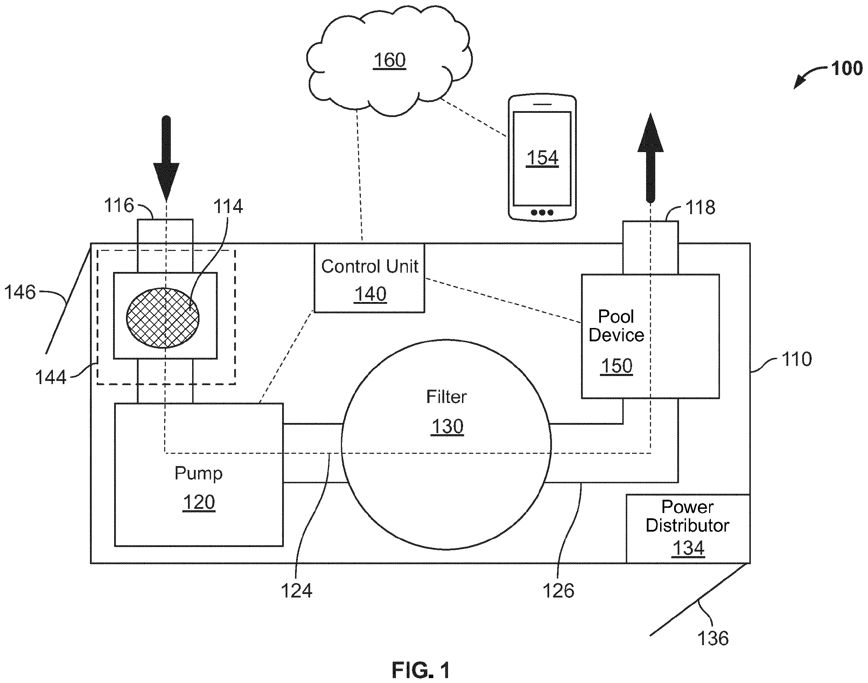

FIG. 1 illustrates an integrated pool pad system 100 according to an embodiment. The integrated pool pad system includes a housing 110, a pump 120, a filter 130, and a control unit 140. In some forms, the integrated pool pad system 100 also includes a strainer 114 and an additional pool device 150. The housing 110 includes an inlet port 116, an outlet port 118, and a power distributor 134, which can be provided in the form of an electrical load center. The inlet port 116, the outlet port 118, the strainer 114, the pump 120, the filter 130, joining pipes 126, and, in some forms, the pool device 150, are all fluidly coupled and form a fluid circuit 124 with one or more bodies of water. The inlet port 116 receives water from the one or more bodies of water, such as a pool or spa or multiple pools and spas, via a drain from the body of water or other suction lines in the circulation system for the body of water. The water is pumped by the pump 120 through the fluid circuit 124, and the outlet port 118 returns water via return lines to the body of water. The housing 110 can include a main opening through which the pump 120, the filter 130, the joining pipes 126, and the pool device 150 can be easily accessed and serviced.

The housing 110 is designed to modularly receive the additional pool device 150 such that the pool device 150 is fluidly coupled to the inlet port 116 and the outlet port 118, and the pool device 150 is electrically coupled to the power distributor 134. The housing 110 includes an access panel 136 such that the power distributor 134 is accessible from outside the housing 110. Accordingly, a transformer of the power distributor 134 for all lower voltage equipment within the enclosure can be accessed. In some forms, the power distributor 134 includes a subpanel for individual breakers for the pool device 150 and the pump 120 that can be accessed through the access panel 136. Further, the access panel 136 allows the pool device 150 to be easily connected to and disconnected from the power distributor 134. Also, the power distributor 134 can be easily serviced, such as performing the operation of resetting breaker switches, for example.

In some forms, the housing 110 includes a strainer compartment 144 that retains the strainer 114. The strainer 114 is fluidly coupled with the inlet port 116 and can be provided in the form of a straining basket, a mesh bag, a grate, or any other device that catches and separates objects from the flow of fluid from the body of water. The strainer compartment 144 can include a dedicated access door 146 so that the strainer 114 can be easily serviced and emptied without opening the main body of the housing 110, where the pump 120 and the filter 130 are located. In some forms, the strainer 114 is instead provided outside of the housing 110 and is fluidly coupled to the inlet port 116 via a pipe union. In some embodiments, the interior walls of the housing 110 can be lined with sound-absorbing paneling to contain the sounds generated by the devices inside the housing 110, such as the pump 120. In some embodiments, when the integrated pool pad system 100 is installed, it is partially or fully recessed into a ground surface. Accordingly, connection pipes fluidly coupled to the inlet port 116 and the outlet port 118, respectively, can be configured to extend upward above the ground surface to connect the body of water to the other elements of the fluid circuit 124.

The pump 120 can be provided in the form of a single-speed pump, a two-speed pump, a continuously variable speed pump, or any other form of fluid pump that circulates fluid. In some forms, the pump 120 is a centrifugal pump. The pump 120 is received within the housing 110. The pump 120 is communicatively coupled to the control unit 140 through a wired or wireless connection such that the control unit 140 is configured to send commands to the pump 120 for execution and is configured to receive data or other commands from the pump 120. The filter 130 can be provided in the form of a cartridge filter, a sand filter, a diatomaceous filter, a hybrid filter, or any other form of filter that provides water filtration for the water being circulated from the body of water through the integrated pool pad system 100.

The additional pool device 150 can be provided in the form of one or more pool pad equipment devices and is received within the housing 110. For example, in some forms, the pool device 150 is provided in the form of a sensor for sensing one or more physical properties of the fluid flowing through the housing 110. For example, the pool device 150 can sense one or more of an oxidation-reduction potential value, a pH value, a temperature value, a pressure value, a flow rate, a calcium hardness value, a total alkalinity value, a cyanuric acid value, a total dissolved solids value, a salinity value, a free chlorine value, or a total chlorine value.

In some forms, the pool device 150 is provided in the form of a chemical dispenser. For example, the chemical dispenser can provide doses of chlorine for proper pool sanitation. Chlorine can be provided by way of a chlorine brick, sodium hypochlorite liquid solution, chlorine gas bubbling, calcium hypochlorite powder, or dichlor and trichlor powder or pucks. Also, the chemical dispenser can dispense an acid or an alkalinity brick to reduce or raise the pH of the water flowing through the housing 110. Acid can be provided by way of an acid brick such as a cyanuric acid brick, sodium bisulfate acid brick, or citric acid brick, a liquid such as hydrochloric acid liquid (muriatic acid), or acetic acid liquid, or via CO2 administration such as through gas bubbling or a CO2 concentrate. In some embodiments, the pool device 150 includes a salt chlorine generator. As discussed herein, the pool device 150 can provide any combination of the features described above. For example, the pool device 150 can provide only sensing of fluid physical properties, only dispensing or generating chemicals, or a combination of both.

Additionally, the pool device 150 can be provided in the form of a heater, such as an electric heater, gas heater, solar heater, or heat pump that is fluidly coupled to the fluid circuit 124.

Further, the pool device 150 can be provided in the form of an automated valve or valves or a booster pump. Again, any or all of the aforementioned pool devices 150 can be provided together, individually, or in any combination with one another and fluidly coupled to form part of the fluid circuit 124. In this way, the pool device 150 can be provided in the form of a modular component or components that can be selectively coupled to and decoupled from both the fluid circuit 124 and the power distributor 134. In some forms, coupling the pool device 150 to the fluid circuit 124 is accomplished by way of a manifold having predefined manifold ports or taps. In some embodiments, the pool device 150 can be fluidly coupled to the fluid circuit 124 by way of quick-connect couplings to foster easy installation. The power distributor 134 can also include quick-connect electrical terminals to facilitate electrically coupling the pool device 150 with the power distributor 134. The housing 110 can include various brackets, mounting structures, compartments, or other physical couplings in order to receive and secure the pool device 150 for modular installment.

The control unit 140 can include a microcontroller, processor, memory, and/or another non-transitory computer-readable medium. In some forms, the control unit 140 is further connected to an antenna to facilitate wireless communication. As discussed herein, the pump 120 is communicatively coupled to the control unit 140. The pool device 150 is also communicatively coupled to the control unit 140 through a wired or wireless connection such that the control unit 140 can send commands to the pool device 150 for execution and can receive data or other commands from the pool device 150. Accordingly, any one of the aforementioned pool devices 150, e.g., sensor, chemical dispenser, heater, automated valve, booster pump, etc., can be controlled by the control unit 140 and/or send information back to the control unit 140 through bi-directional communication. The pump 120, the pool device 150, and the control unit 140 can be communicatively coupled via a Wi-Fi network (e.g., an 802.1 1x network, which can include one or more wireless routers, one or more switches, etc.), a peer-to-peer network (e.g., a Bluetooth network, a ZigBee ^{®} network, a Z-Wave ^{®} network, a proprietary RF connection, etc.), a cellular network (e.g., a 3G network, a 4G network, etc., complying with any suitable standard, such as CDMA, GSM, LTE, LTE Advanced, WiMAX, etc.), a wired network, an EnOcean ^{®} network, etc.

The control unit 140 can also be communicatively coupled to a user interface, which can be located on the housing 110, on a remote user device 154, or both. For example, the control unit 140 may be embedded with network connectivity, either within the device itself or in cooperation with a connected server. In some embodiments, the control unit 140 may send and/or receive data transmissions over a local area network (LAN), WAN, and/or another communication network using any suitable communication protocol. For example, the control unit 140 may communicate over the LAN with a local server computing device, such as in a private network where transmitted data to/from the control unit 140 is isolated from the Internet or another WAN, at least until the local server processes the data. In some embodiments, (a) local server(s) may be operated at the same location as the control unit 140, such as at a residence. The remote user device 154 may also be connected to the LAN in order to access IoT data; alternatively, IP connectivity may be used, connecting the LAN and/or the local server(s) to the Internet or another WAN so that local and/or remote user devices 154 can access the local server.

In still other embodiments, the control unit 140 may connect, directly or through a router, gateway, base station, etc., to the WAN in order to communicate with cloud-based computing resources 160. Such an environment provides a bi-directional, direct-to-cloud communication between the control unit 140, the remote user device 154, and one or more application and/or hosting servers. In some embodiments, the control unit 140 may communicate with and directly use the resources of one or more physical, remote server computing devices, which may be deployed in one or more data centers (for example) in a particular geographic location or dispersed throughout several geographic locations. In other embodiments, the remote physical servers may cooperate to provide virtualized computing resources that can be allocated for use by, for example, an authorized user of a computing resource service provider. Thus, a user that controls or provides services for the control unit 140 may configure and deploy one or more virtual servers that are allocated for the use of certain physical computing resources, such as processor cycles, memory, data storage, etc., of the physical servers. The control unit 140 may, in turn, be configured to connect to the virtual servers. For example, the control unit 140 may be programmed to connect to an IP address associated with an endpoint that connects a virtual network adapter of the servers to a physical network adapter of the physical servers. The virtual servers, or the computing resource service provider's computing environment in which the virtual servers are deployed, may provide other computing resource services for implementing an IoT platform. Given this bi-directional, cloud-based environment 160, the control unit 140 may be deployed as a direct-to-cloud IoT device. In other words, the deployment of the control unit 140 in a LAN-based or cloud-based environment 160 provides for internetworking of physical devices, connected devices, and/or smart devices at the network level.

Accordingly, the control unit 140 can receive, aggregate, and send sensed parameters from the pump 120 and/or one or more of the pool devices 150 (where applicable). Further, the control unit 140 can control operation of the pump 120 or the pool device 150 based on one or more of programmed operations, schedules, programmed thresholds, or analytics performed at the control unit 140, the cloud 160, or the remote user device 154, and/or inputs by a user on the user interface. For example, as mentioned above, the pool device 150 can include chemical sensing and dispensing capabilities. When the pool device 150 senses the free chlorine value and the total chlorine value, it can send the sensed values to the control unit 140. The control unit 140 can then send the sensed parameters to the cloud 160, the remote server, or the remote user device 154 to be analyzed and to provide instructions back to the control unit 140 for implementation in response to the sensed parameters or the control unit 140 can provide the analysis itself. For example, if the control unit 140 determines that chlorine needs to be dispensed or generated, the control unit 140 sends a signal to cause the pool device 150 to dispense or generate chlorine in any of the manners described above. Next, in some forms, the pool device 150 can sense the pH value of the fluid flowing through the fluid circuit 124 and send the sensed pH value to the control unit 140. The control unit 140 can then send the sensed pH values to the cloud 160, the remote server, or the remote user device 154 to be analyzed and to provide instructions back to the control unit 140 for implementation in response to the pH values or the control unit 140 can provide the analysis itself. If the control unit 140 determines that the pH value is outside of a specified range, the control unit 140 can instruct the pool device 150 to dispense an acid in any manner described above to lower the pH value or dispense an alkalinity brick to raise the pH value.

In instances where the pool device 150 includes a temperature sensor and a heater, the pool device 150 can sense the temperature value of the fluid flowing through the fluid circuit 124 and send the sensed temperature value to the control unit 140. The control unit 140 can then send the sensed temperature value to the cloud 160, the remote server, or the remote user device 154 to be analyzed and to provide instructions back to the control unit 140 for implementation in response to the sensed temperature values, or the control unit 140 can provide the analysis itself. If the control unit 140 determines that the temperature value is outside of a specified range, the control unit 140 can instruct the pool device 150 to heat the water flowing through the fluid circuit 124. The heater can also be configured to self-regulate based on the sensed temperature value.

Even further, in some instances, the pool device 150 includes a pressure sensor and at least one automated valve. Accordingly, the pool device 150 can sense a pressure value of the fluid flowing through the fluid circuit 124 and send the sensed pressure value to the control unit 140. The control unit 140 can then send the sensed pressure value to the cloud 160, the remote server, or the remote user device 154 to be analyzed and to provide instructions back to the control unit 140 for implementation in response to the sensed pressure values, or the control unit 140 can provide the analysis itself. If the control unit 140 determines that the pressure value is out of a specified range, the control unit 140 can open and close various automated valves and initiate an automatic backwash program to backwash the filter 130.

Accordingly, the control unit 140 can act as a master controller for the devices included in the integrated pool pad system 100. The control unit 140 and/or the cloud server 160 can provide data analytics to provide predictions about when the pump 120 or the pool device 150 should be active and can suggest or automatically provide various operations of the pump 120 or the pool device 150. For example, the control unit 140 can provide modified pump operation schedules based on any of the sensed properties described above. Also, the control unit 140 can provide modified pump operation schedules based on which types of pool devices 150 are included in the fluid circuit 124. For example, the total dynamic head of the fluid circuit 124 will be impacted by how many sensors, chemical dispensers, heaters, booster pumps, and the like are included in the integrated pool pad system 100. Accordingly, by identifying which elements are included in the fluid circuit 124, the control unit 140 can suggest pump operation schedules that maximize cleanliness while reducing energy consumption.

Further, the control unit 140 can predict when certain chemicals might need to be dispensed or when the heater might need to be activated based on the sensed parameters described above. It should be noted further that devices external to the integrated pool pad system 100 can also be electrically connected to the power distributor 134 to receive power and can also be communicatively coupled to the control unit 140 to be controlled by the control unit 140. For example, an external device, such as a pool cleaner and/or pool lighting, can be powered via the power distributor 134, and the activation of the pool cleaner and/or pool lighting can be controlled by the control unit 140 based on one or more of programmed operations, schedules, thresholds, or analytics performed at the control unit 140, the cloud 160, or the remote user device 154, and/or inputs by a user via the user interface.

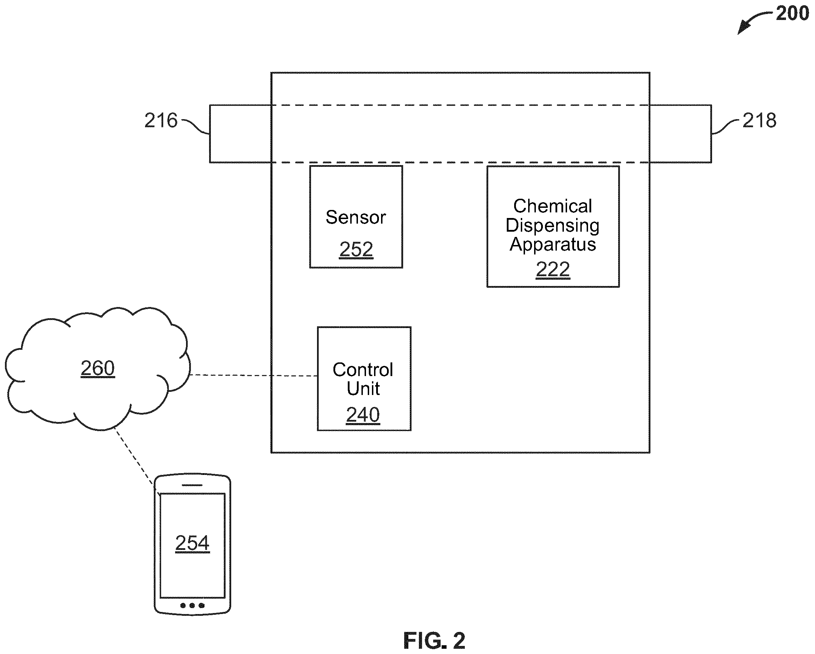

FIG. 2 illustrates an integrated water chemistry device 200 according to an embodiment. In some forms, the integrated water chemistry device 200 can be provided as the pool device 150 or included as one of the pool devices 150 in the integrated pool pad system 100 described above. In some forms, the integrated water chemistry device 200 can be coupled directly, via unions, to the inlet port 116 of the integrated pool pad system 100 or the inlet of a pool pump in a conventional pool pad. The integrated water chemistry device 200 includes a control unit 240, an inlet port 216, an outlet port 218, a sensor 252, and a chemical dispensing apparatus 222. The control unit 240 can include a microcontroller, processor, memory, and/or other non-transitory computer-readable medium(s) and is communicatively coupled to the sensor 252 and the chemical dispensing apparatus 222 via a wired or wireless connection. The control unit 240 can be configured to include bi-directional communication with the sensor 252 and the chemical dispensing apparatus 222 in any of the manners described above with respect to the control unit 140 and the pool device 150. Accordingly, any of the connectivity and control aspects of the control unit 140 of the integrated pool pad system 100 are hereby incorporated by reference to the description of the control unit 240 of the integrated water chemistry device 200. For example, the control unit 240 can also be communicatively coupled to a user interface, which can be located on the integrated water chemistry device 200, on a remote user device 254, or both. The control unit 240 can also communicate with a cloud-based environment 260 at a remote server.

The sensor 252 is fluidly coupled to the inlet port 216 and the outlet port 218 and is configured to sense one or more chemical or physical properties of the fluid flowing through the integrated water chemistry device 200. For example, the sensor 252 can sense one or more of an oxidation-reduction potential value, a pH value, a water temperature value, an ambient air temperature value, a pressure value, a flow rate, a calcium hardness value, a total dissolved solids (TDS) value, a total alkalinity value, a cyanuric acid value, a free chlorine value, or a total chlorine value. In some forms, the sensor 252 includes a colorimeter that can measure or detect one or more of the aforementioned values. In some forms, the sensor 252 or the control unit 240 can convert the TDS value to a salinity value.

The chemical dispensing apparatus 222 is coupled to a water supply from a body of water, such as a pool, that flows from the inlet port 216 to the outlet port 218, and the chemical dispensing apparatus 222 can dispense or generate various chemicals to control pool water chemistry. For example, the chemical dispensing apparatus 222 can dispense chlorine bricks, a sodium hypochlorite liquid solution, chlorine gas bubbling, calcium hypochlorite powder, dichlor and trichlor powder or pucks, cyanuric acid bricks, sodium bisulfate acid solids, citric acid solids, hydrochloric acid liquid (muriatic acid), acetic acid liquid, calcium bricks, alkalinity bricks, among other chemicals known in the art for controlling pool water chemistry. In some forms, the chemical dispensing apparatus 222 comprises a chemical brick storage and a chemical brick feeder. The chemical brick storage can be used to stack various solids such as chlorine bricks, acid bricks, calcium bricks, and alkalinity bricks according to the brick type.

Accordingly, the chemical brick storage can be provided in the form of a single-channel or a multi-channel chemical brick storage, and the chemical brick feeder can be provided in the form of a single-channel or a multi-channel chemical brick feeder depending on the number of different types of chemical bricks used with the chemical dispensing apparatus 222. For example, the chemical brick storage can include separate columns to store chlorine bricks, acid bricks, calcium bricks, and alkalinity bricks, and the chemical brick feeder can also include separate channels for distributing the different types of chemical bricks. Accordingly, users can load multiple bricks of the same type simultaneously into the columns of the chemical brick storage. In some embodiments, water flowing into the inlet port 216 can be routed separately to particular channels of the chemical brick feeder in order to dispense chemicals. Automated valves can control the water flow to control the pool chemistry precisely. In some forms, the channels of the chemical brick feeder dispense the chemical bricks into a single compartment into which water flow is selectively controlled to dispense multiple types of chemical bricks at one time.

In some forms, the chemical bricks can include an identifier to help the user sort the chemical bricks into the correct storage columns and/or allow the chemical dispensing apparatus 222 to identify and control the proper dosing of each specific type of chemical brick. For example, the chemical bricks can be color-coated, coated in a polymer, and printed with a particular pattern or computer-readable code such as a QR code, shaped in a specific, identifying three-dimensional or geometric shape, or tagged with an RFID tag. Different doses of the same chemical can also be provided to the chemical dispensing apparatus 222 to allow for large dosing as well as fine-tuned changes without having to stock numerous smaller chemical brick dosages. Different chemical brick doses can also be distinguished from one another via an identifier, as described above. Accordingly, the user and/or the chemical dispensing apparatus 222 can ensure proper dosing and distribution of the chemical bricks. In some forms, the chemical bricks can be coated in watersoluble polymer to allow for safe handling without gloves. In some forms, the chemical bricks can be packaged in cardboard.

As discussed above, several of the chemicals dispensed by the chemical dispensing apparatus 222 are provided in liquid form, such as a sodium hypochlorite liquid solution, a hydrochloric acid liquid (muriatic acid), or acetic acid liquid, among others. Accordingly, the liquid chemicals can be provided to the chemical dispensing apparatus 222 in a fillable cartridge. Thus, rather than a chemical brick storage and a chemical brick feeder, the chemical dispensing apparatus 222 can include cartridge receptacles to receive chemical cartridges and automated valves for dispensing the liquid chemicals. The chemical cartridges can be installed by way of a quick-connect fluid coupling to facilitate easy installation and removal. In some forms, the chemical dispensing apparatus 222 includes a chemical brick storage, a chemical brick feeder, cartridge receptacles to receive chemical cartridges, and automated valves for dispensing the liquid chemicals all in one. Accordingly, the integrated water chemistry device 200 can use both chemical bricks and liquid chemicals to control pool water chemistry. In some embodiments, the chemical dispensing apparatus 222 is configured to generate certain chemicals. For example, the chemical dispensing apparatus 222 can include a salt-chlorine generator or a gas distributor to provide chlorine gas, CO2 dosing, or hydrochloric acid gas. In some forms, the salt-chlorine generator can be provided in addition to either or both of the chemical brick storage and the chemical brick feeder or the cartridge receptacles and the automated valves.

In use, the integrated water chemistry device 200 can sense various aspects of water chemistry using the sensor 252, and the sensor 252 and can send sensed values to the control unit 240. The control unit 240 can then send the sensed parameters to the cloud 260, the remote server, or the remote user device 254 to be analyzed and to provide instructions back to the control unit 240 for implementation in response to the sensed parameters, or the control unit 240 can provide the analysis itself. If it is determined that a particular sensed value is outside of an acceptable range, the control unit 240 can control the chemical dispensing apparatus 222 to distribute or generate various chemicals by way of brick distribution, liquid dispensing, or other means described above. As a non-limiting example, when the sensor 252 senses the free chlorine value and the total chlorine value of the pool water, it can send the sensed values to the control unit 240. The control unit 240 can then send the sensed parameters to the cloud 260, the remote server, or the remote user device 254 to be analyzed and to provide instructions back to the control unit 240 for implementation in response to the free chlorine value and the total chlorine value of the pool water, or the control unit 240 can provide the analysis itself. If the control unit 240 determines that chlorine needs to be dispensed or generated, the control unit 240 will send a signal to cause the chemical dispensing apparatus 222 to dispense or generate chlorine in any of the manners described above.

Next, in some forms, the sensor 252 can sense the pH value of the pool water and send the sensed pH value to the control unit 240. The control unit 240 can then send the sensed parameters to the cloud 260, the remote server, or the remote user device 254 to be analyzed and to provide instructions back to the control unit 240 for implementation in response to the sensed pH value or the control unit 240 can provide the analysis itself. If the control unit 240 determines that the pH value is outside of a specified range, the control unit 240 can instruct the chemical dispensing apparatus 222 to dispense an acid in any manner described above to lower the pH value or dispense an alkalinity brick to raise the pH value. In some forms, the integrated water chemistry device 200 controls chlorine and acid distribution using only sensed pH values and/or ORP values. In some forms, artificial intelligence, learning sets through machine learning, or other mass balance models can be used by the control unit 240, the cloud 260, the remote server, or the remote user device 254 to provide accurate chemical dosing.

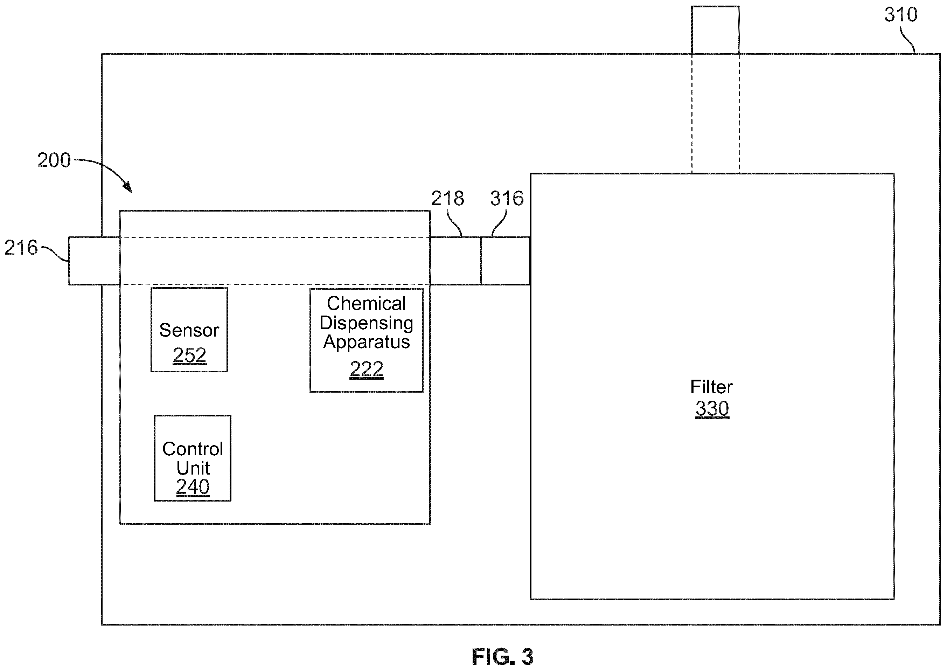

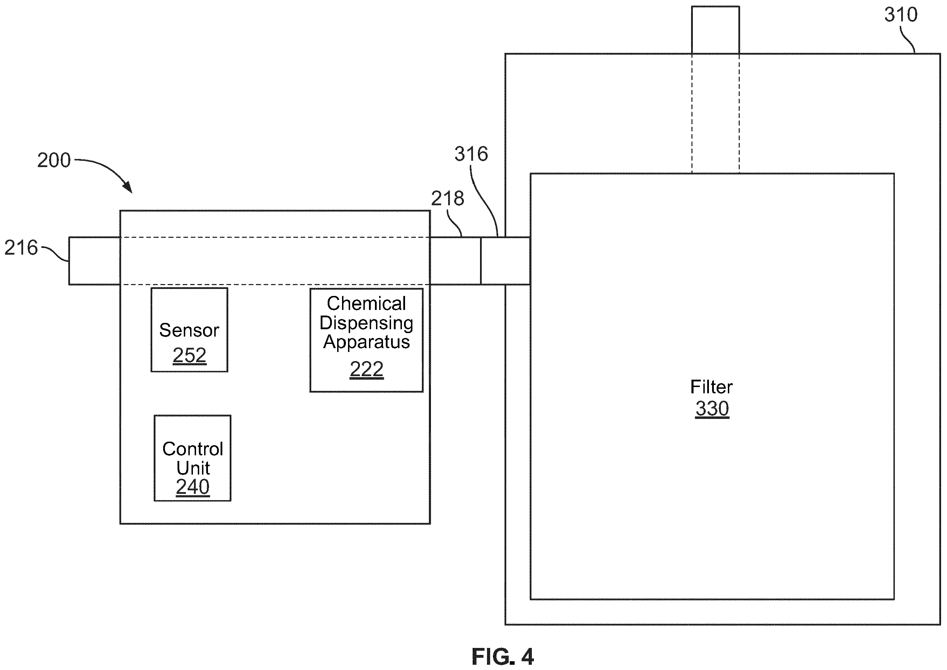

As shown in FIG. 3, in some forms, the integrated water chemistry device 200 is provided inside of a housing 310 of a filter 330. For example, the chemical brick feeder and/or the automated valves for dispensing liquid chemicals can be positioned inside the housing 310 of the filter 330 to dispense chemicals directly into the filter 330. However, the chemical brick storage and/or the chemical cartridges can be coupled to or generally provided on the outside of the housing 310 so that the chemicals can be restocked, replenished, or replaced easily from outside of the housing 310 of the filter 330. As shown in FIG. 4, in some forms, the integrated water chemistry device 200 is positioned completely outside of the housing 310 but is fluidly coupled directly to an inlet port 316 of the filter 330. Accordingly, no additional tubing, pipes, or plumbing is required between the outlet port 218 of integrated water chemistry device 200 and the inlet port 316 of the filter 330.

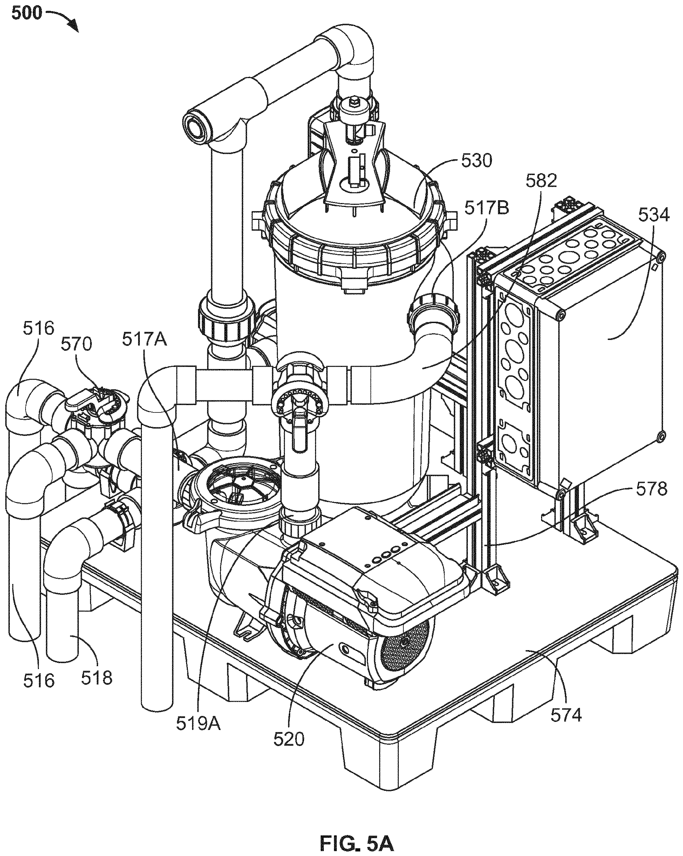

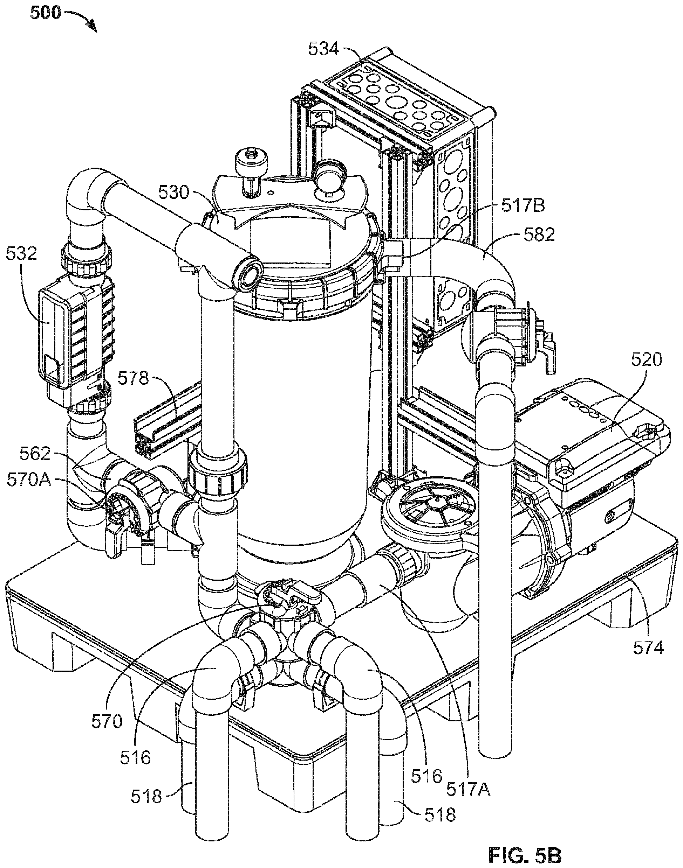

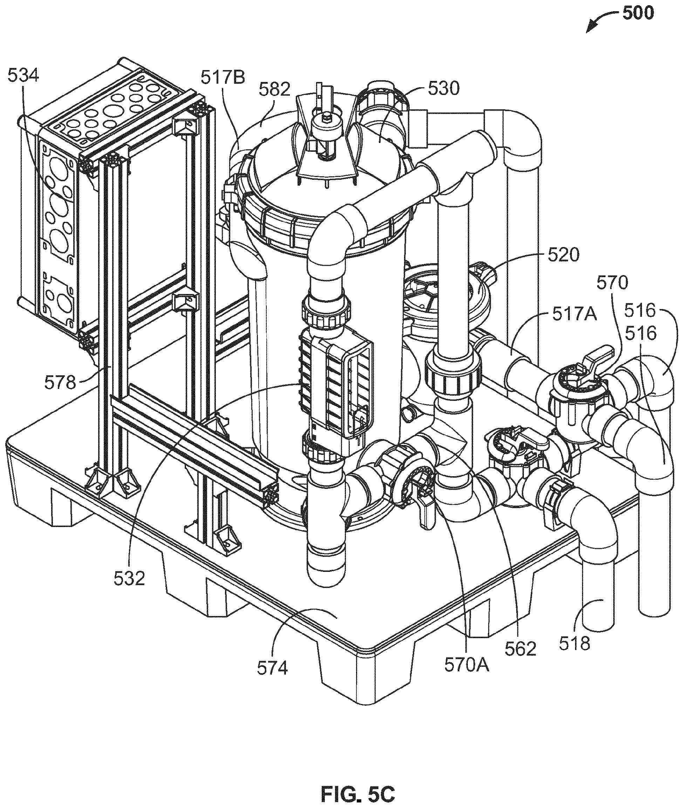

FIGS. 5A-5D illustrate one embodiment of an integrated pool pad 500 according to the principles set forth above with respect to the integrated pool pad 100. The integrated pool pad 500 includes one or more system inlet pipes 516, one or more system outlet pipes 518, a pump 520, a filter 530, a power distributor 534, a salt chlorine generator 532, and valves 570. Aside from the power distributor 534, the aforementioned components of the integrated pool pad 500 are fluidly coupled to one another via rigid pipes to form a fluid circuit with an associated pool and/or spa. The system inlet pipes 516 direct water from the pool to the pump 520. The pump 520 can be provided in the form of a single-speed pump, a two-speed pump, a continuously variable speed pump, or any other form of fluid pump that circulates fluid. In some forms, the pump 520 is a centrifugal pump. The pump 520 circulates the pool water through the fluid circuit. During circulation, water flows from the pool or spa through the pump 520 to the filter 530.

The filter 530 can be provided in the form of a cartridge filter, a sand filter, a diatomaceous filter, a hybrid filter, or any other form of filter that provides water filtration for the water being circulated from the pool or spa through the integrated pool pad 500. In some forms, the filter 530 includes a pressure gauge and a relief valve design to maintain the proper pressure within the filter 530 for proper water filtration. The filter 530 can also include a drain port for draining the filter.

An outlet pipe 519B of the filter 530 directs circulating water to the salt chlorine generator 532 and/or a bypass line 562, including a valve 570A. In some forms, the valves 570 or the valve 570A can be provided in the form of a ball valve. The salt chlorine generator 532 provides sanitizing chemicals, such as chlorine, by way of electrolysis. In some forms, the salt chlorine generator 532 includes a valve at an inlet and/or at an outlet of the salt chlorine generator 532 to selectively allow fluid flow through the salt chlorine generator 532. When opened, the valve 570A allows water to flow through the bypass line 562 to bypass the salt chlorine generator 532 when valves associated with the inlet and/or outlet of the salt chlorine generator 532 are closed. Accordingly, water is directed from the salt chlorine generator 532, the bypass line 562, or both to the system outlet pipes 518 leading back to the pool and/or spa, depending on the state of the valve 570A and the valves of the salt chlorine generator 532.

In some forms, an elbow pipe 582 can be used to couple an outlet pipe 519A of the pump 520 with an inlet pipe 517B of the filter 530. In some forms, the elbow pipe 582 is provided in the form of two legs joined at an approximately 90-degree angle. Here, a first leg of the elbow pipe 582 is positioned at about a 45-degree angle with respect to an inlet pipe 517A of the pump 520. Because the outlet pipe 519B of the filter 530 is positioned at about a 180-degree angle with respect to the inlet pipe 517B of the filter 530, the elbow pipe 582 allows the outlet pipe 519B of the filter 530 to be positioned at a 45-degree angle with respect to the inlet pipe 517A of the pump 520. Accordingly, the elbow pipe 582 allows the outlet pipe 519B of the filter 530 to be positioned closer to the inlet pipe 517A of the pump 520 than if the inlet and outlet pipes 517B, 519B of the filter 530 were positioned at a 90-degree angle with respect to the inlet pipe 517A of the pump 520. Therefore, the position of the filter 530 with respect to the position of the pump 520, as facilitated by the elbow pipe 582, allows for a smaller footprint of the integrated pool pad 500.

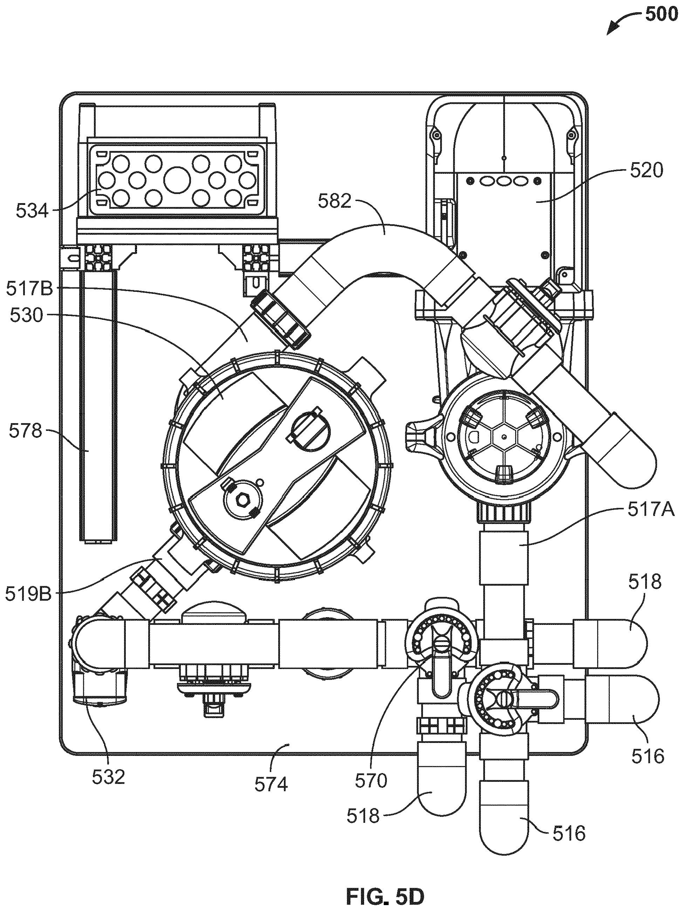

To further reduce the footprint of the integrated pool pad 500, the system inlet pipes 516 can be positioned vertically above the system outlet pipes 518 in a partially overlayed manner. In addition, the system inlet pipes 516 can be laterally offset from the system outlet pipes 518, such as diagonally offset (see FIG. 5D). Accordingly, the vertically extending portions of the system inlet pipes 516 and the system outlet pipes 518 can extend adjacent one another. This plumbing arrangement not only saves space but also makes access, installation, and service easier by having all of the main plumbing points of the integrated pool pad 500 that connect with external plumbing for the pool and/or spa positioned in one location. In the instance where the integrated pool pad 500 is mounted on a skid 574 and/or within an enclosure, as explained further below, this overlayed design also requires fewer openings in the enclosure to accommodate the system inlet pipes 516 and the system outlet pipes 518.

The power distributor 534 is configured to receive power from a power source, such as a wall outlet at 230VAC, and provide power to the pump 520 and the salt chlorine generator 532. The power distributor 534 can be provided in the form of an electrical load center. The power distributor 534 can include a power supply for the salt chlorine generator 532, one or more circuit breakers, and one or more transformers. Accordingly, the transformer can provide power for lower voltage equipment such as pool lights and booster pumps requiring 12VAC. In some forms, such lower voltage equipment can be controlled by relays of the pump 520.

For ease of shipment and installation at a customer's pool or spa, the integrated pool pad 500 includes the skid 574 or other base on which the aforementioned components of the integrated pool pad 500 are pre-plumbed, pre-wired, and mounted. Frame members 578 are used to mount the power distributor 534 to the skid 574 to keep it raised up and away from the top surface of the skid 574 in case of leaking or flooding. In some forms, the frame members 578 are provided in the form of extruded aluminum rods. In some forms, the integrated pool pad 500 includes an enclosure (not shown) that surrounds the skid 574 and components mounted thereon. The enclosure can be provided in a form analogous to the housing 110 described above with respect to the integrated pool pad 100. The enclosure shields the components of the integrated pool pad 500 from weather conditions and can also reduce the ambient noise emitted by the integrated pool pad 500 to the surrounding environment. The enclosure can include one or more access doors to easily service any of the components of the integrated pool pad 500.

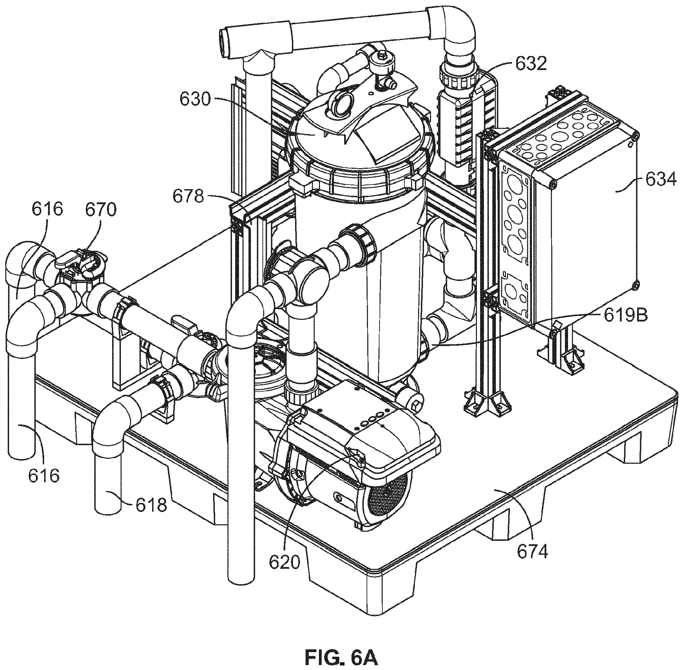

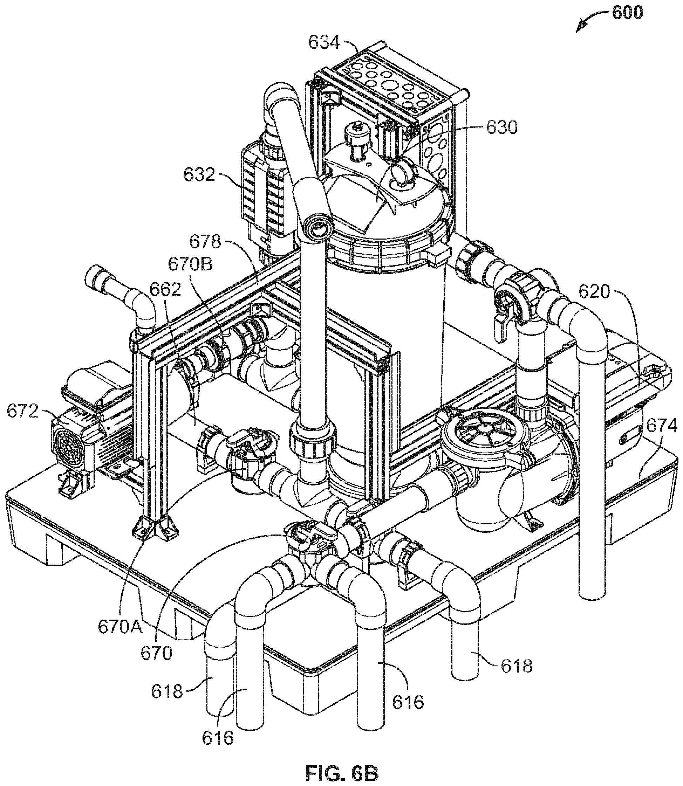

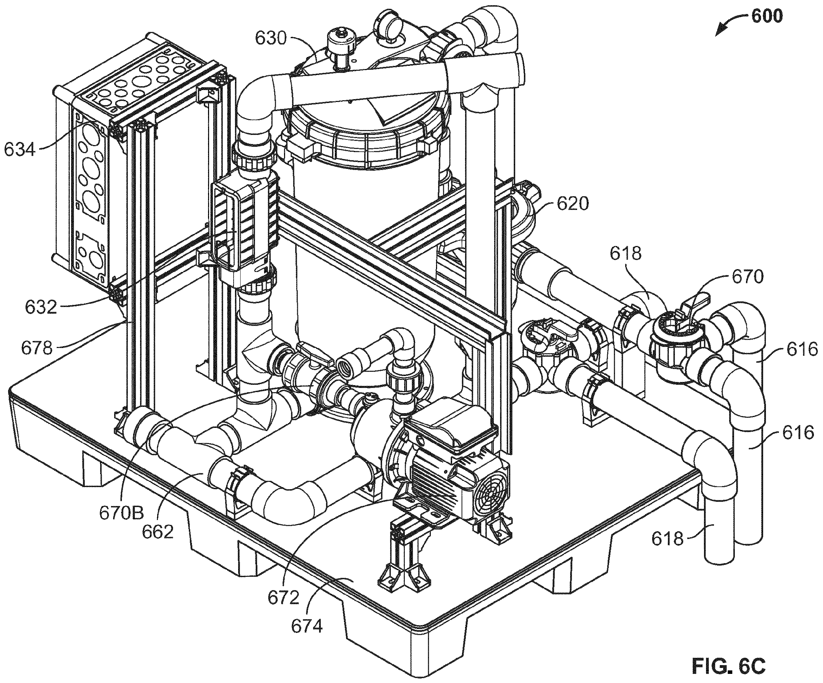

FIGS. 6A-6E illustrate one embodiment of an integrated pool pad 600 according to the principles set forth above with respect to the integrated pool pad 100 and the integrated pool pad 500. The integrated pool pad 600 is a modified version of the integrated pool pad 500, which includes a booster pump 672, and the disclosure above with respect to the integrated pool pad 500 and components thereof is hereby incorporated by reference. The integrated pool pad 600 includes one or more system inlet pipes 616, one or more system outlet pipes 618, a main pump 620, a filter 630, a power distributor 634, a salt chlorine generator 632, valves 670, and the booster pump 672. Aside from the power distributor 634, the aforementioned components of the integrated pool pad 600 are fluidly coupled to one another via rigid pipes to form a fluid circuit with an associated pool and/or spa. The system inlet pipes 616 direct water from the pool to the main pump 620. The main pump 620 circulates the pool water through the fluid circuit.

During circulation, water flows from the pool or spa through the main pump 620 to the filter 630. An outlet pipe 619B of the filter 630 then directs water to the salt chlorine generator 632, a bypass line 662 including a valve 670A, and/or the booster pump 672. In some forms, the salt chlorine generator 632 includes a valve at an inlet and/or at an outlet of the salt chlorine generator 632 to selectively allow fluid flow through the salt chlorine generator 632. When opened, the valve 670A allows water to flow through the bypass line 662 to bypass the salt chlorine generator 632 when valves associated with the inlet and/or outlet of the salt chlorine generator 632 are closed. Accordingly, water is directed from the salt chlorine generator 632, the bypass line 662, or both to the system outlet pipes 618 leading back to the pool and/or spa, depending on the state of the valve 670A and the valves of the salt chlorine generator 632.

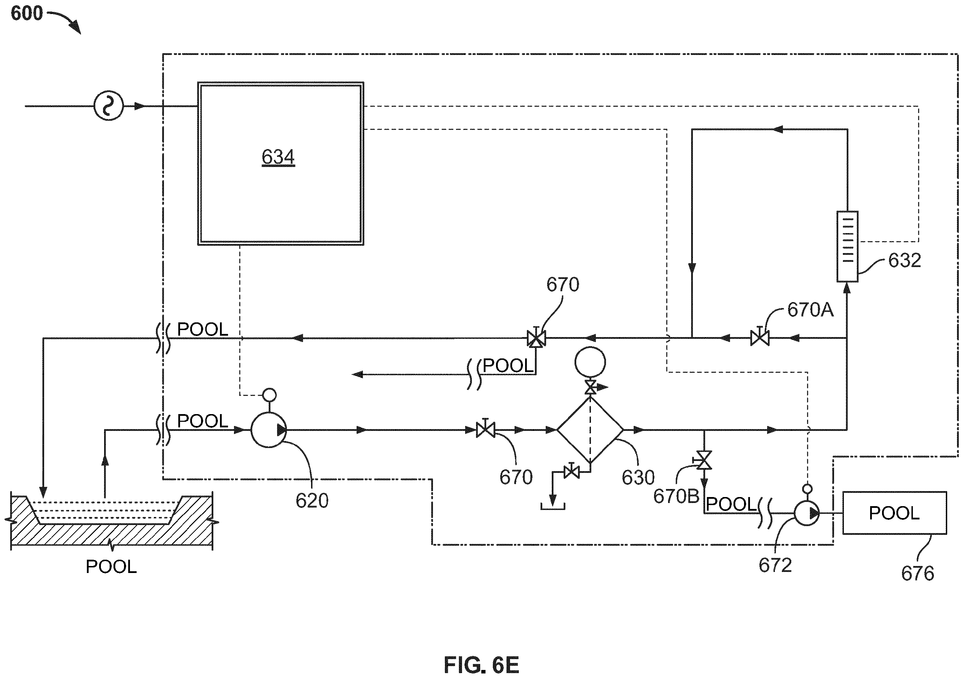

Additionally, a shutoff valve 670B can control whether water from the fluid circuit flows to the booster pump 672. If the shutoff valve 670B is open, the booster pump 672 can be used to direct water to other parts of the system. In particular, the booster pump 672 is useful to supply water to a pool cleaner 676 (see FIG. 6E), such as a pressure-side pool cleaner.

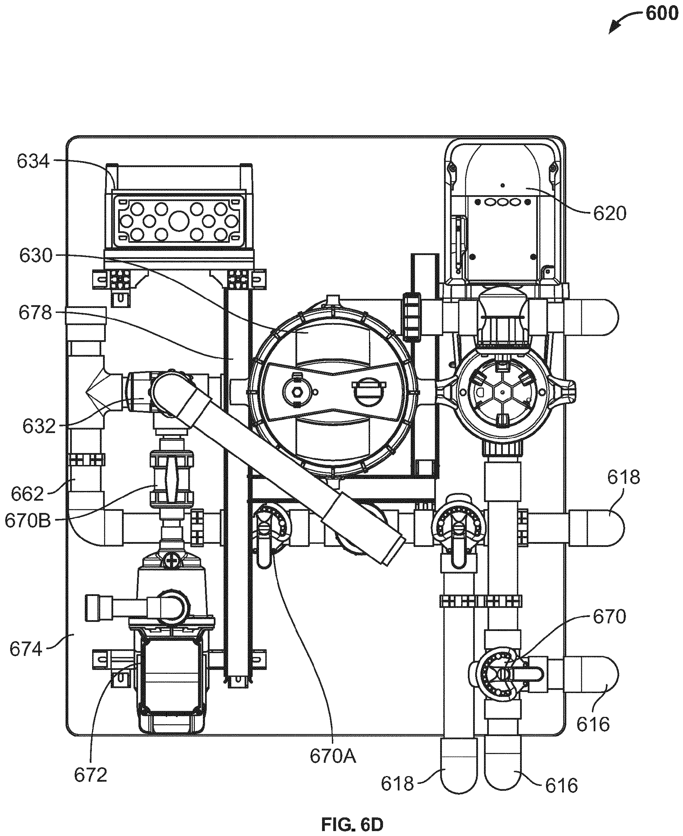

To reduce the footprint of the integrated pool pad 600, one or more of the system inlet pipes 616 can be positioned vertically above one or more of the system outlet pipes 618 in a partially overlayed manner. In addition, the system inlet pipes 616 can be laterally offset from the system outlet pipes 618, such as diagonally offset (see FIG. 6D). Accordingly, the vertically extending portions of the one or more of the system inlet pipes 616 and the one or more of the system outlet pipes 618 can extend adjacent one another. This plumbing arrangement not only saves space but also makes access, installation, and service easier by having all of the main plumbing points of the integrated pool pad 600 that connect with external plumbing for the pool and/or spa positioned in one location. In the instance where the integrated pool pad 600 is mounted on a skid 674 and/or within an enclosure, as explained further below, this overlayed design also requires fewer openings in the enclosure to accommodate the system inlet pipes 616 and the system outlet pipes 618.

The power distributor 634 is configured to receive power from a power source, such as a wall outlet at 230VAC, and provide power to the main pump 620 and the salt chlorine generator 632. The power distributor 634 can be provided in the form of an electrical load center. The power distributor 634 can include a power supply for the salt chlorine generator 632, one or more circuit breakers, and one or more transformers. Accordingly, the transformer can provide power for lower voltage equipment such as pool lights and booster pumps requiring 12VAC. In some embodiments, lower voltage equipment can be electrically coupled to the main pump 620, such that the main pump 620 relays power to the lower voltage equipment. More specifically, the main pump 620 can relay power to the booster pump 672 and control when the booster pump 672 is activated and deactivated according to user-selected or preprogrammed schedules. Accordingly, such lower voltage equipment can be controlled by relays of the main pump 620.

For ease of shipment and installation at a customer's pool or spa, the integrated pool pad 600 includes a skid 674 or other base element on which the aforementioned components of the integrated pool pad 600 are pre-plumbed, pre-wired, and mounted. Frame members 678 are used to mount the power distributor 634 to the skid 674 to keep it raised up and away from the top surface of the skid 674 in case of leaking or flooding. The frame members 678 can also raise and support the booster pump 672 on the skid 674 to ensure that the booster pump 672 is stable and to simplify the plumbing layout. In some forms, the frame members 678 are provided in the form of extruded aluminum rods. In some forms, the integrated pool pad 600 includes an enclosure (not shown) that surrounds the skid 674 and components mounted thereon. The enclosure can be provided in a form analogous to the housing 110 described above with respect to the integrated pool pad 100. The enclosure shields the components of the integrated pool pad 600 from weather conditions and can also reduce the ambient noise emitted by the integrated pool pad 600 to the surrounding environment. The enclosure can include one or more access doors to easily service any of the components of the integrated pool pad 600.

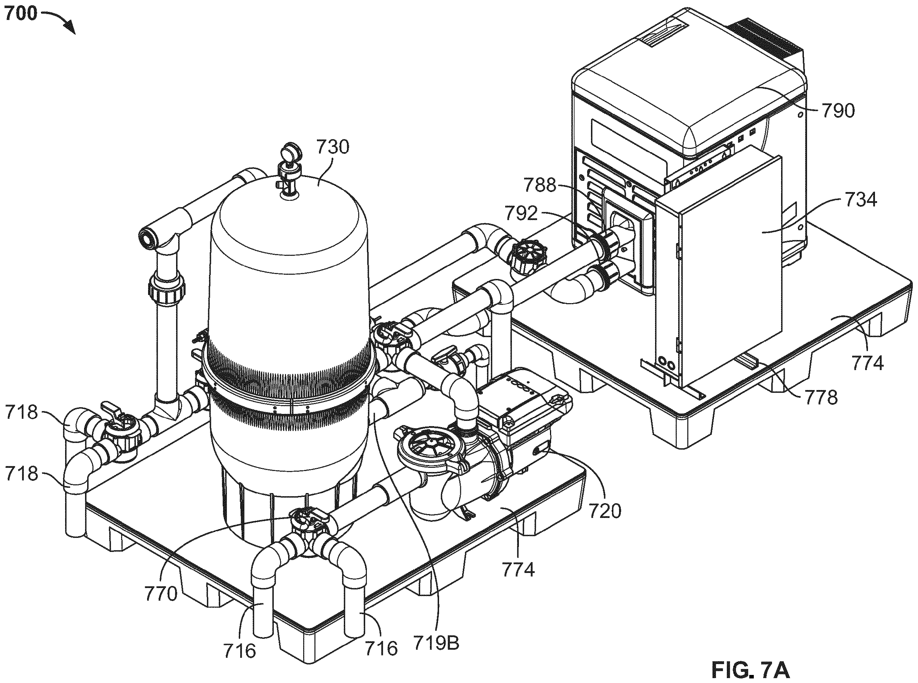

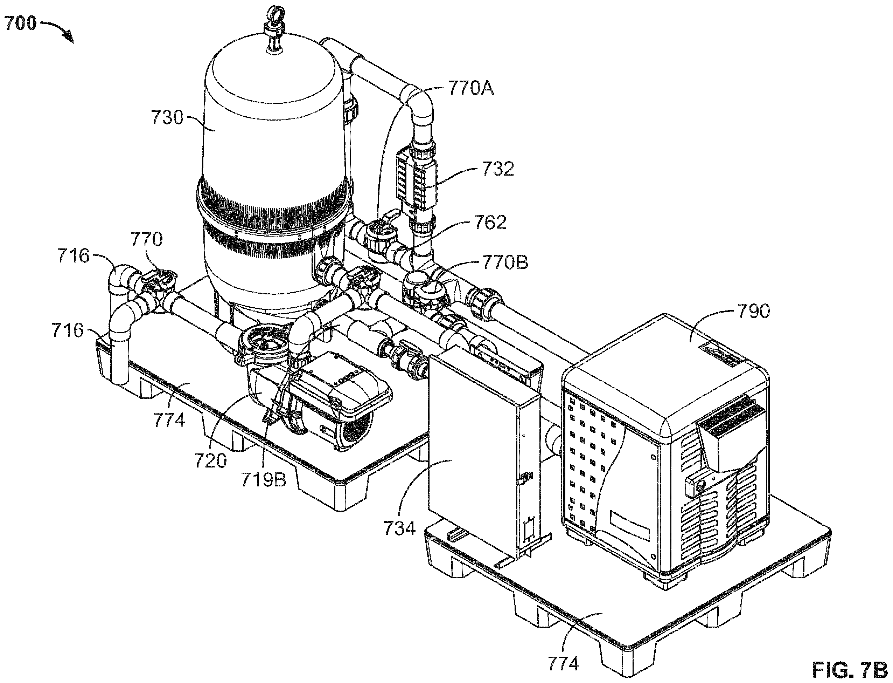

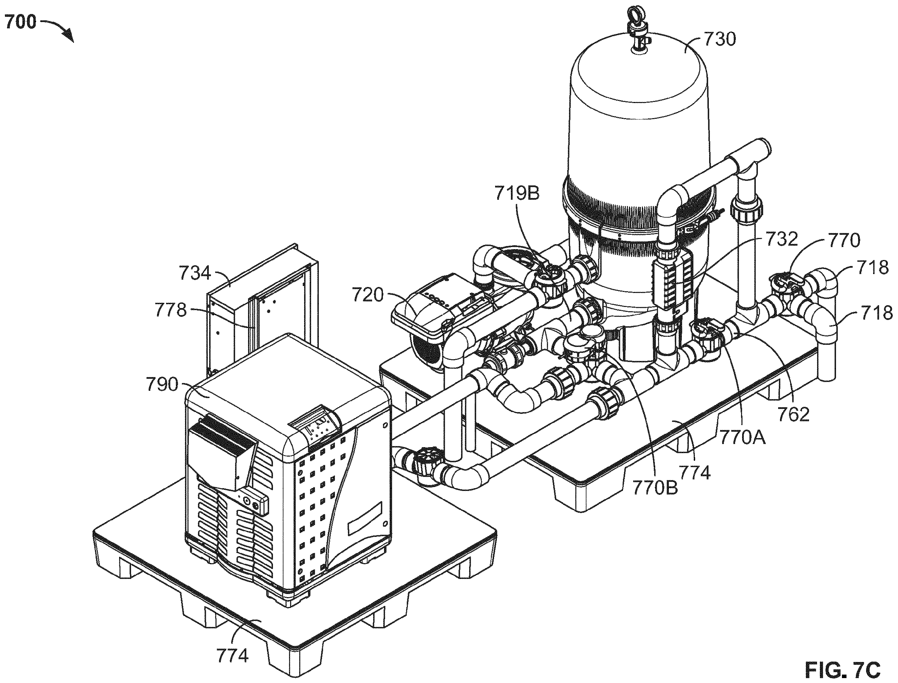

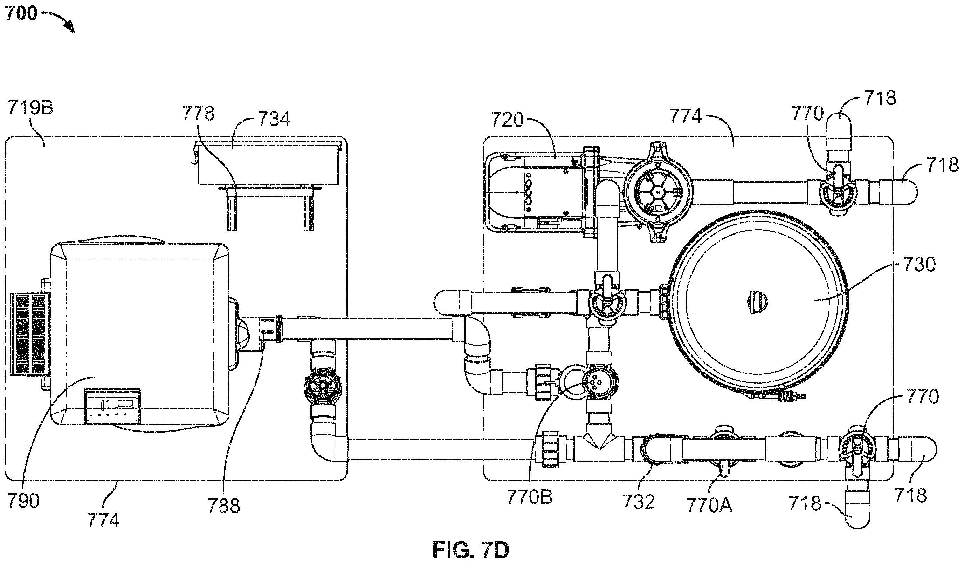

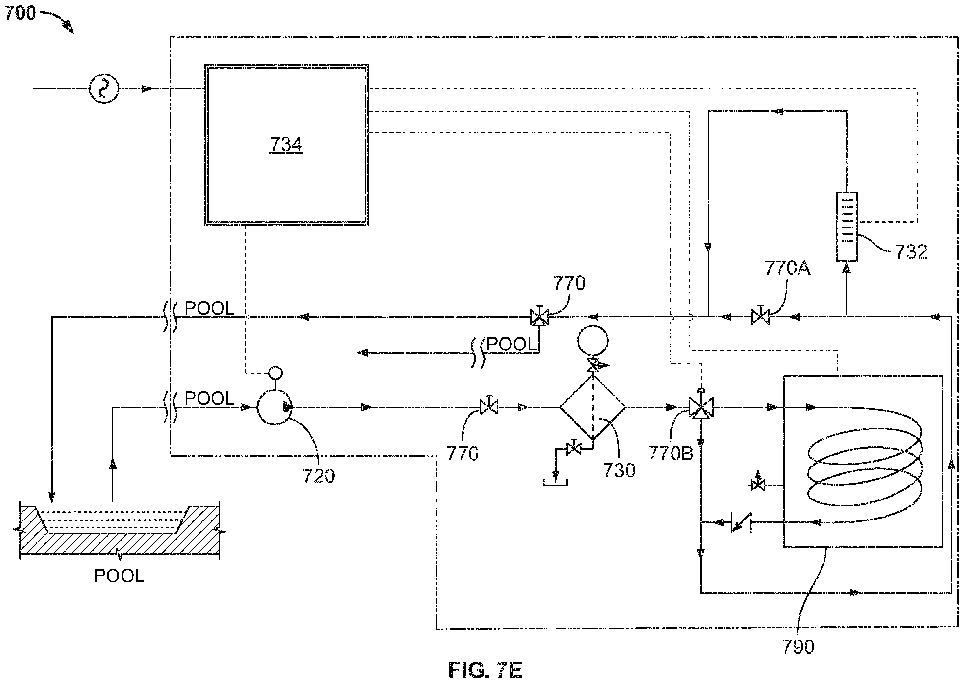

FIGS. 7A-7E illustrate one embodiment of an integrated pool pad 700 according to the principles set forth above with respect to the integrated pool pad 100, the integrated pool pad 500, and the integrated pool pad 600. The integrated pool pad 700 includes one or more system inlet pipes 716, one or more system outlet pipes 718, a pump 720, a filter 730, an automation cabinet 734, a salt chlorine generator 732, valves 770, and a heater 780. Aside from the automation cabinet 734, the aforementioned components of the integrated pool pad 700 are fluidly coupled to one another via rigid pipes to form a fluid circuit with an associated pool and/or spa. The system inlet pipes 716 direct water from the pool to the pump 720. The pump 720 can be provided in the form of a single-speed pump, a two-speed pump, a continuously variable speed pump, or any other form of fluid pump that circulates fluid. In some forms, the pump 720 is a centrifugal pump. The pump 720 circulates the pool water through the fluid circuit. The filter 730 can be provided in the form of a cartridge filter, a sand filter, a diatomaceous filter, or any other form of filter that provides water filtration for the water being circulated from the pool or spa through the integrated pool pad 700. In some forms, the filter 730 includes a pressure gauge and a relief valve design to maintain the proper pressure within the filter 730 for proper water filtration. The filter 730 can also include a drain port for draining the filter 730.

During circulation, water from the pool or spa flows through the pump 720 to the filter 730. An outlet pipe 719B of the filter 730 further directs water to a three-way valve 770B that fluidly couples the outlet pipe 719B of the filter 730, an inlet pipe 788 of the heater 790, and an outlet pipe 792 of the heater 790. The three-way valve 770B can include an electronically controlled motorized actuator configured to divert a portion of the circulating water from flowing through the heater 790. The three-way valve 770B can direct all of the water to the heater inlet pipe 788, only a portion of the water to the heater inlet pipe 788, or the three-way valve 770B can be actuated to bypass the heater 790 entirely. The heater 790 can be provided in the form of a gas heater, an electric heater, a solar heater, a heat pump, and the like. In some forms, the heater 790 includes one or more temperature sensors, flow sensors, or pressure sensors.

From the outlet pipe 792 of the heater 790 and/or the outlet pipe 719B of the filter 730, water is directed to the salt chlorine generator 732 and/or a bypass line 762, including a valve 770A. In some forms, the valves 770 or the valve 770A can be provided in the form of a ball valve. The salt chlorine generator 732 provides sanitizing chemicals, such as chlorine, by way of electrolysis. In some forms, the salt chlorine generator 732 includes a valve at an inlet and/or at an outlet of the salt chlorine generator 732 to selectively allow fluid flow through the salt chlorine generator 732. When opened, the valve 770A allows water to flow through the bypass line 762 to bypass the salt chlorine generator 732 when valves associated with the inlet and/or outlet of the salt chlorine generator 732 are closed. Accordingly, water is directed from the salt chlorine generator 732, the bypass line 762, or both to the system outlet pipes 718 leading back to the pool and/or spa, depending on the state of the valve 770A and the valves of the salt chlorine generator 732.

The automation cabinet 734 is configured to control the function of the pump 720, the three-way valve 770B, and the heater 790 through a wired or wireless communication while also providing power to one or more components of the integrated pool pad 700. All of the connectivity and control aspects of the control unit 140 of the integrated pool pad system 100 are hereby incorporated by reference to the description of the automation cabinet 734. For example, the automation cabinet 734 can be communicatively coupled to a user interface, which can be located on the automation cabinet 734, on the remote user device 154, or both. The automation cabinet 734 can also communicate with the cloud-based environment 160 at a remote server. The automation cabinet 734 may be embedded with network connectivity, either within the device itself or in cooperation with a connected server. In some embodiments, the automation cabinet 734 may send and/or receive data transmissions over a local area network (LAN), WAN, and/or another communication network using any suitable communication protocol. Accordingly, the automation cabinet 734 may connect, directly or through a router, gateway, base station, etc., to the WAN in order to communicate with the cloud-based computing resources 160. Such an environment provides a bi-directional, direct-to-cloud communication between the automation cabinet 734, the remote user device 154, and one or more application and/or hosting servers.

Further, the automation cabinet 734 can provide centralized control of the pump 720 and the heater 790 based on user-defined schedules and/or temperature sensors, pressure sensors, or flow meters provided as part of the heater 790 or separately along the fluid circuit. The automation cabinet 734 can receive power from a power source, such as a wall outlet at 230VAC, and provide power to the pump 720 and the salt chlorine generator 732. The automation cabinet 734 can also include an electrical load center. The automation cabinet 734 can include a power supply for the salt chlorine generator 732, one or more circuit breakers, and one or more transformers. Accordingly, the transformer can provide power for lower voltage equipment such as pool lights and booster pumps requiring 12VAC. Relays of the pump 720 can control such lower voltage equipment.

For ease of shipment and installation at a customer's pool or spa, the integrated pool pad 700 includes one or more skids 774 on which the aforementioned components of the integrated pool pad 700 are pre-plumbed, pre-wired, and mounted. The pump 720, three-way valve 770B, and the heater 790 can also come pre-wired to the automation cabinet 734, such that the integrated pool pad 700 requires minimal effort to fluidly couple the integrated pool pad 700 to a pool or spa and begin use. Frame members 778 are used to mount the automation cabinet 734 to the skids 774 to keep it raised up and away from the top surface of the skid 774 in case of leaking or flooding. In some forms, the frame members 778 are provided in the form of extruded aluminum rods. In some forms, the integrated pool pad 700 includes one or more enclosures (not shown) that surround the skids 774 and components mounted thereon. The enclosure can be provided in a form analogous to the housing 110 described above with respect to the integrated pool pad 100. The enclosure shields the components of the integrated pool pad 700 from weather conditions and can also reduce the ambient noise emitted by the integrated pool pad 700 to the surrounding environment. The enclosure can include one or more access doors to easily service any of the components of the integrated pool pad 700.

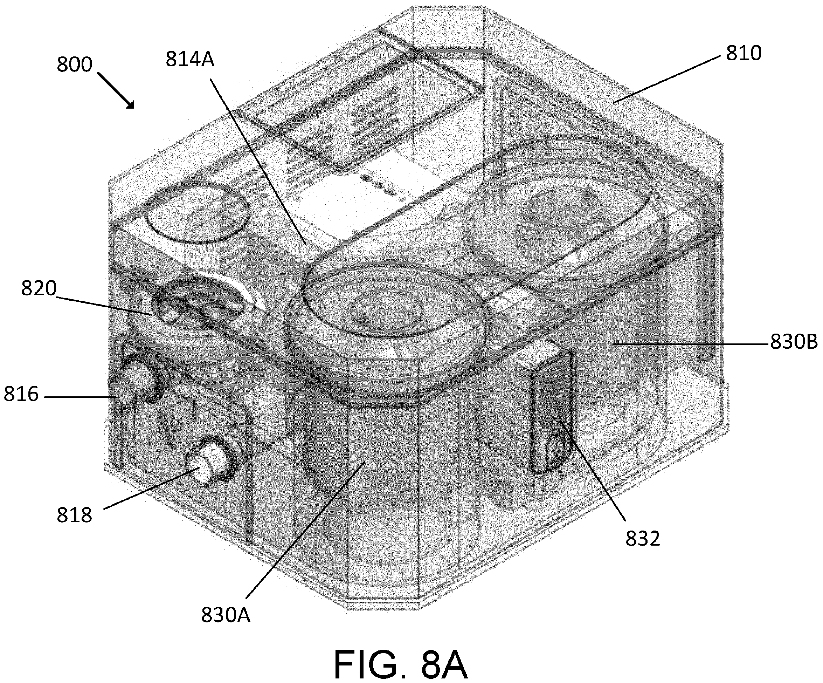

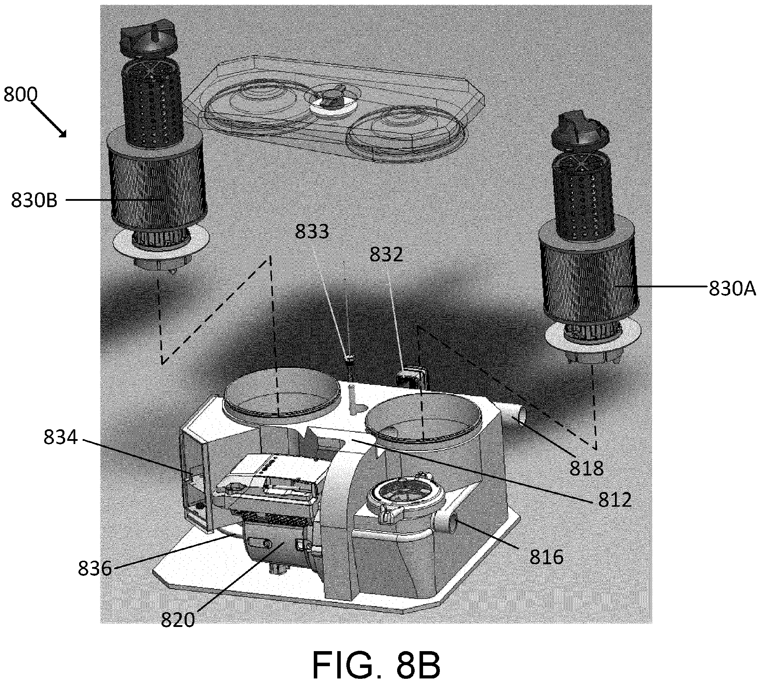

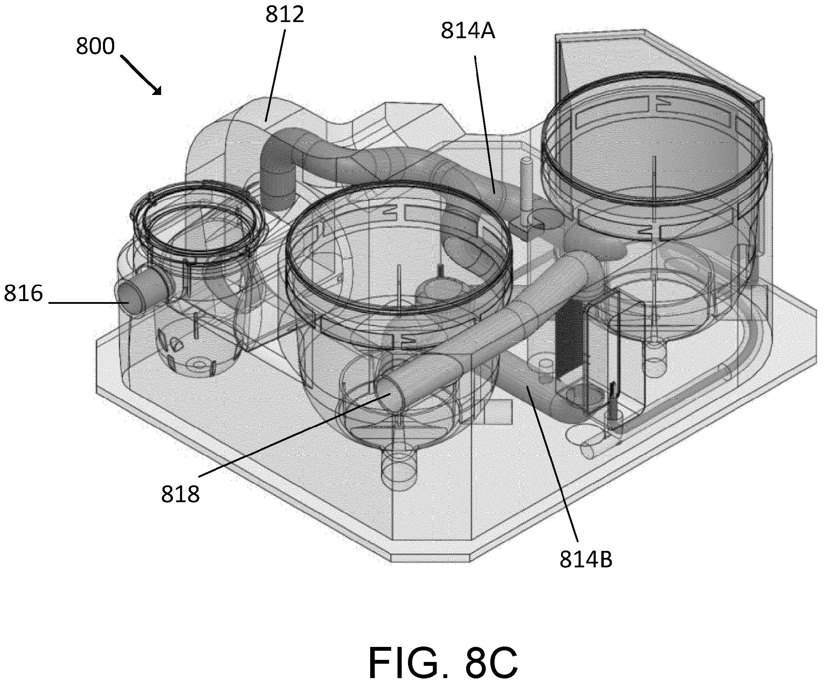

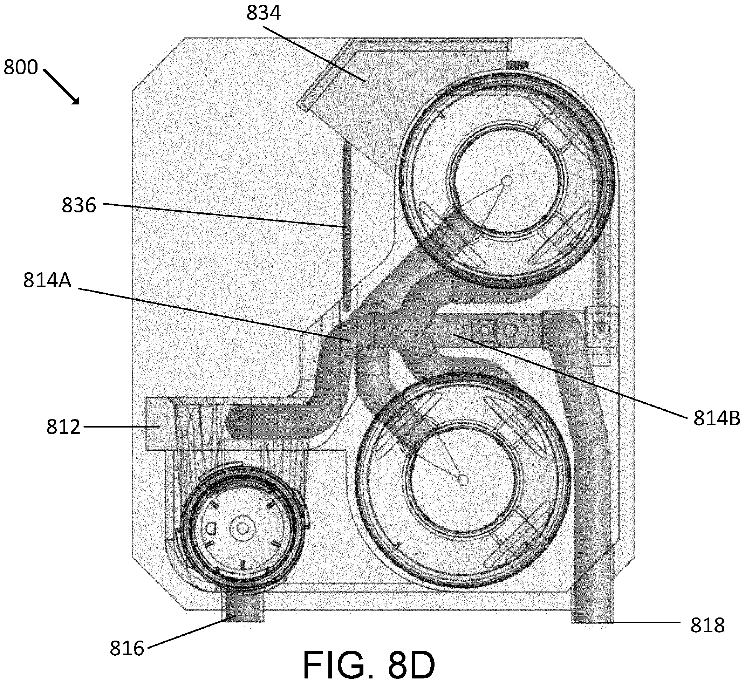

FIGS. 8A-8D illustrate an integrated pool pad 800 according to the principles set forth above with respect to the integrated pool pad 100, the integrated pool pad 500, the integrated pool pad 600, and the integrated pool pad 700. The integrated pool pad 800 includes an outer housing 810, an inner housing 812 (see FIG. 8B), one or more system inlet pipes 816, one or more system outlet pipes 818, a pump 820, filters 830A, 830B, a power distributor 834, and a salt chlorine generator 832. The system inlet pipe 816, the system outlet pipe 818, the pump 820, the filters 830A, 830B, and the salt chlorine generator 832 are fluidly coupled to one another via a first manifold 814A and a second manifold 814B to form a fluid circuit with an associated pool and/or spa. The inner housing 812 forms a first manifold 814A and a second manifold 814B via bores within the inner housing 812. In some forms, the first manifold 814A and the second manifold 814B are formed via pipe connections in addition to, or in place of, the bores in the inner housing 812.

The system inlet pipe 816 directs water from the pool to the pump 820. The pump 820 can be provided in the form of a single-speed pump, a two-speed pump, a continuously variable speed pump, or any other form of fluid pump that circulates fluid. In some forms, the pump 820 is a centrifugal pump. The pump 820 circulates the pool water through the fluid circuit. During circulation, water flows from the pool or spa through the pump 820 to the first manifold 814A, and the first manifold 814A directs the water to the filters 830A, 830B. The filters 830A, 830B are provided in the form of cartridge filters with a center core and a pleated cartridge element. However, other pool filter configurations are contemplated, such as those described above. The second manifold 814B directs circulating water from the filters 830A, 830B, to the salt chlorine generator 832. The salt chlorine generator 832 provides sanitizing chemicals, such as chlorine, by way of electrolysis. In some forms, the salt chlorine generator 532 includes an associated sensor 833 to aid in the determination of pool water cleanliness and/or chlorine levels in the pool.

In addition to fluidly coupling various components of the integrated pool pad 800, the inner housing 812 includes an arrangement of stabilizing elements forming voids configured to receive, stabilize, and protect the pump 820, the filters 830A, 830B, the power distributor 834, the salt chlorine generator 832 and inner power cables 836, which distribute power from the power distributor 834 to the pump 820 and the salt chlorine generator 832. Accordingly, the integrated pool pad 800 is provided in the form of a monolithic device. Further, the inner housing 812 can be covered by the outer housing 810, which substantially or entirely encloses and/or shields the components of the integrated pool pad 800 from weather conditions and reduces the ambient noise emitted by the integrated pool pad 800 to the surrounding environment. The outer housing 810 can include one or more access doors, windows, and vents. The access doors can be configured to provide access to the controls of the pump 820 and the filters 830A, 830B to allow convenient programming and operation of the pump 820 and to allow the pump 820 and the filters 830A, 830B to be easily serviced. The windows of the outer housing 810 allow for easy inspection of the components of the integrated pool pad 800, and the vents prevent the active components of the integrated pool pad 800 from overheating.

The power distributor 834 is configured to receive power from a power source, such as a wall outlet at 230VAC, and provide power to the pump 820 and the salt chlorine generator 832. The power distributor 834 can be provided in the form of an electrical load center. The power distributor 834 can include a power supply for the salt chlorine generator 832, one or more circuit breakers, and one or more transformers. Accordingly, the transformer can provide power for lower voltage equipment such as pool lights and booster pumps requiring 12VAC. In some forms, such lower voltage equipment can be controlled by relays of the pump 820.

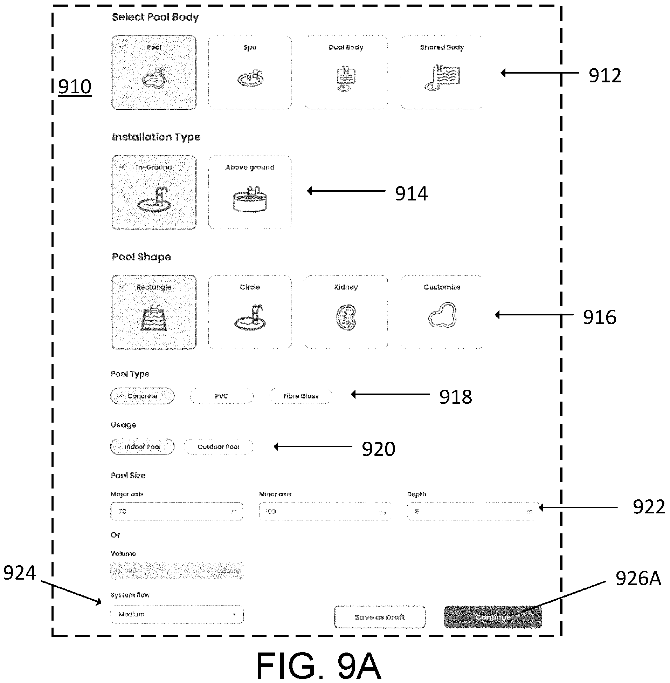

FIGS. 9A-9C are schematic representations of a user interface presenting a virtual pool pad configurator. The user interface can be provided in the form of a computing device, a mobile device, or any other electronic device capable of displaying an interactive environment run by a software application such as via an Internet browser or mobile application. The virtual pool pad configurator can include a non-transitory computer-readable medium storing a program that causes a computer to display various interfaces described below. In general, using the virtual pool pad configurator, a customer can input various specifications about a pool or spa and select various customizations, and the pool pad configurator will determine specific pool pad equipment that will be compatible in combination for the customer's pool. Next, the pool pad configurator can provide a purchase order for the customer, 3D models, drawings, and other specifications for a manufacturer, and if the customer accepts, a pre-plumbed, pre-wired, and pre-assembled pool pad will be delivered to the location of the customer's pool. For example, the output of the pool pad configurator can be manufacturing schematics for any of the integrated pool pads 100, 500, 600, 700, 800 previously described. The pool pad configurator can, thus, automatically provide the design schematics and parts information for hundreds of unique pool pad permutations.

In some forms, when the pool pad configurator is initiated, it opens to a welcome page that prompts the customer to select whether the pool is a commercial pool, residential pool, or other type of body of water. The selection between a commercial pool or a residential pool can determine which pool pad products the pool pad configurator recommends to the customer. For example, a first set of products can be provided for the commercial pool pad builds, and a second set of products can be provided for the residential pool pad builds. In some forms, the first and second set of products are mutually exclusive, and in other forms, the first and second set of products have one or more overlapping pool pad products. Once the selection between a commercial and a residential pool is made, the pool pad configurator moves to a pool specifications interface 910.

The pool specifications interface 910 includes a plurality of customer configurable inputs to define aspects of the pool for which the customer would like to purchase a comprehensive, pre-assembled pool pad. For example, the pool specifications interface 910 includes interactive input modules, including a pool body module 912, a pool installation type module 914, a pool shape module 916, a pool material module 918, a pool location module 920, a pool size module 922, and a pool flow module 924. The pool body module 912 can include a selection between a stand-alone pool, multiple stand-alone pools, a stand-alone spa, multiple stand-alone spas, a dual body combination of a stand-alone pool and a stand-alone spa, multiple combinations of stand-alone pools and stand-alone spas, a pool and spa with a shared body, or multiple pools and spas with shared bodies.

The pool installation type module 914 can include a selection between an in-ground pool and an above-ground pool. The pool shape module 916 can include a selection between a rectangular shape, a circular shape, a kidney shape, or a customizable shape that the customer can draw to represent irregular pool shapes. The pool material module 918 can include a selection between a concreate pool, a PVC pool, or a fiber glass pool. The pool location module 920 can include a selection between an indoor pool and an outdoor pool. The pool size module 922 can include a volume input or drop-down dimension menus to assist the customer in calculating the volume of the pool. Finally, the pool flow module 924 can include a drop-down menu for the customer to select between a low, medium, or high flow requirement for the pool or spa. Once the customer has input all of the pool specifications via the pool specifications interface 910, the customer can save their progress or select a continue button 926A to move to a pool package interface 930.

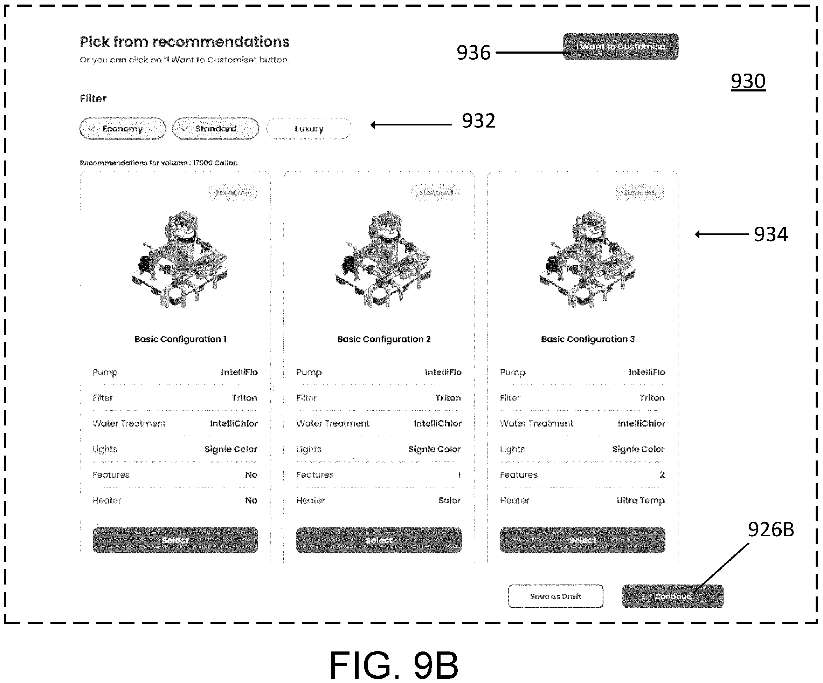

As shown in FIG. 9B, on the pool package interface 930, a filter selection module 932, a base configuration selection module 934, a customization button 936, and a continue button 926B are displayed. The filter selection module 932 can include interactive features that allow a customer to select between a plurality of filter product offerings. For example, the filter selection module 932 can include a plurality of buttons corresponding to filter products at varying price points, such as an economy selection, a standard selection, or a luxury selection. The filter selection module 932 can also be provided in the form of a drop-down menu. The base configuration selection module 934 can include interactive features, such as tiles, that allow a customer to select between a plurality of pre-configured pool pad arrangements. In some embodiments, the pre-configured pool pad arrangements are provided in the form of the integrated pool pads 500, 600, 700, 800. The pre-configured pool pad arrangements can include a plurality of commonly selected groups of pool pad components based on one or more of the customer inputs from the pool specifications interface 910 arranged along a spectrum of price points. For example, based on the customer inputs to the pool size module 922 and the pool flow module 924, the pool pad configurator will recommend certain types of pool pad devices (e.g., pump, filter, high throughput chlorinator, etc.) and/or specific models of those pool pad devices (e.g., high-flow intelligent pump, high-capacity sand filter, etc.)

For instance, a first base configuration can include a standard pump, a standard filter, and a standard sanitization device, such as a chlorinator. A second base configuration can include a high-end pump, a high-end filter, and a high-end sanitization device. A third base configuration can include the high-end pump, the high-end filter, the high-end sanitization device, and one or more other pool pad devices, such as a heater and/or pool lights. In some forms, the base configuration selection module 934 includes a graphical depiction of an integrated pool pad corresponding to each base configuration. In some forms, the base configuration selection module 934 is provided in the form of a drop-down menu. If one of the base configurations from the base configuration selection module 934 is selected and the continue button 926B is pressed, the pool pad configurator advances to a review and confirmation interface (not shown) where the customer can review and confirm the order. However, if the customization button 936 is selected, the pool pad configurator advances to a pool pad customization interface 940. The customer can also save their progress and exit out of the pool pad configurator at this time.

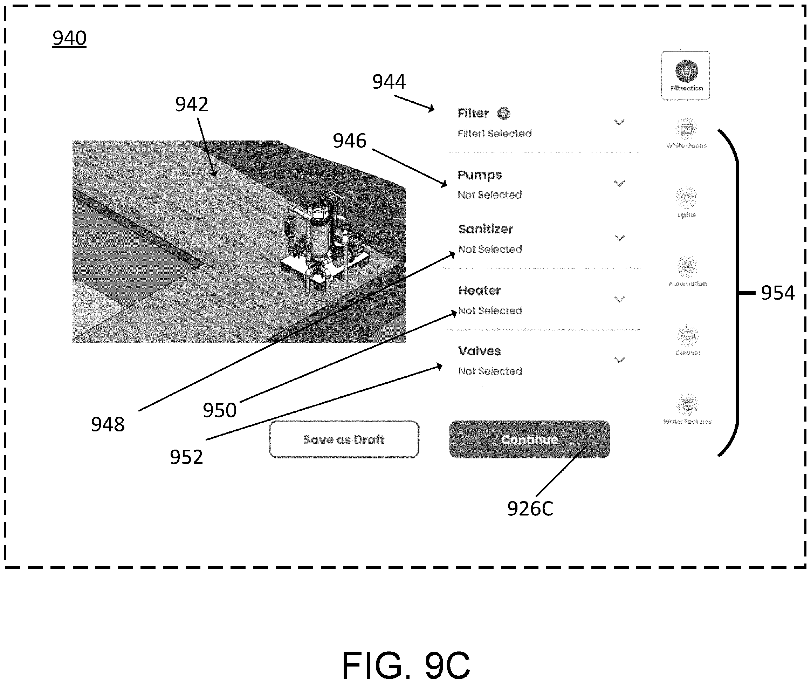

As shown in FIG. 9C, a graphical pool pad depiction 942, a filter selection module 944, a pump selection module 946, a sanitizer selection module 948, a heater selection module 950, a valve selection module 952, an other device selection module 954 and a continue button 926C are provided on the pool pad customization interface 940. Each of the selection modules 944, 946, 948, 950, 952, 954 can include interactive features that allow the customer to pick between a number of recommended pool pad device models based on one or more of the inputs to the pool specifications interface 910. For example, the filter selection module 944 can provide a selection between various pool filter models, the pump selection module 946 can provide a selection between various pool pump models, the sanitizer selection module 948 can provide a selection between various pool sanitization models, the heater selection module 950 can provide a selection between various pool heater models, and the valve selection module 952 can provide a selection between various pool valves.

Further, the other device selection modules 954 can include one or more of a white goods selection module to select devices such as skimmers, return fittings, drains, or flow meters, a lights selection module for selecting various pool lights, an automation selection module for selecting centralized control systems for the pool pad, a pool cleaner selection module for selecting various pool cleaners, and a water features selection module for selecting various water features. In addition, the inputs to one or more of the selection modules 944, 946, 948, 950, 952, 954 can affect the recommended pool pad devices provided by the other of the selection modules 944, 946, 948, 950, 952, 954. For example, the pool configurator can keep track of the required flow rate, required filter pressure, and the total dynamic head (TDH) of the customized pool pad being built through dynamic calculations. Accordingly, as more pipe length and valves are required for the pool pad components and higher pressure is required by the pool pad, the higher capacity pumps will be recommended in the pump selection module 946 to meet the pool pad requirements.

Further, as the pool pad components are selected, the graphical pool pad depiction 942 can be automatically updated to include realistic depictions of each of the specific pool pad components that the customer selects for their pool pad. Once all of the pool pad components are selected and the continue button 926C is pressed, the pool pad configurator advances to a review and confirmation interface (not shown) where the customer can review and confirm the order. Once an integrated pool pad is ordered using either the pool package interface 930 or the pool pad customization interface 940, the integrated pool pad is manufactured and delivered to the customer's pool as a pre-assembled, pre-plumbed, and pre-wired package, such as the integrated pool pads 500, 600, 700, 800 described above.

In other embodiments, other configurations are possible. For example, those of skill in the art will recognize, according to the principles and concepts disclosed herein, that various combinations, sub-combinations, and substitutions of the components discussed above can provide appropriate pool water chemistry control for a variety of different configurations under a variety of operating conditions.

Various examples will be described in the following:
Example 1 is an integrated pool pad system. The integrated pool pad system may include a housing having an inlet port, an outlet port, and a power distributor, the inlet port and the outlet port in communication with a body of water; a pump contained within the housing and in fluid communication with the inlet port and the outlet port; a filter contained within the housing and in fluid communication with the inlet port and the outlet port; and a control unit configured to control operation of the pump, the control unit including a user interface.
In Example 2, the subject matter of Example 1 can optionally include that the integrated pool pad system further includes a strainer coupled to the inlet port and a strainer compartment integrated with the housing. The strainer is separately accessible from the pump and the filter.
In Example 3, the subject matter of any one of Examples 1 or 2 can optionally include that the integrated pool pad system further includes at least one automated valve in communication with the control unit, the control unit designed to open and close the at least one automated valve to backwash the filter.
In Example 4, the subject matter of any one of Examples 1 to 3 can optionally include that the housing includes an access panel, the power distributor is provided in the form of a load center, and the load center is accessible from outside of the housing via the access panel.
In Example 5, the subject matter of any one of Examples 1 to 4 can optionally include that the inlet port receives water from one or more bodies of water and the outlet port distributes water to the one or more bodies of water.
In Example 6, the subject matter of any one of Examples 1 to 5 can optionally include that the integrated pool pad system further includes sound-absorbing panels positioned within the housing.
In Example 7, the subject matter of any one of Examples 1 to 6 can optionally include that the housing is at least partially recessed into a ground surface.
In Example 8, the subject matter of any one of Examples 1 to 7 can optionally include that the user interface is provided on a remote control device.
In Example 9, the subject matter of any one of Examples 1 to 8 can optionally include that an external pool device is electrically coupled to the power distributor.
In Example 10, the subject matter of any one of Examples 1 to 9 can optionally include that the housing is designed to modularly receive a pool device such that the pool device is fluidly coupled to the inlet port and the outlet port, and the pool device is electrically coupled to the power distributor.
In Example 11, the subject matter of Example 10 can optionally include that the pool device is one or more of a water chemistry sensor, a chemical dispenser, a heater, or a booster pump.
In Example 12, the subject matter of any one of Examples 10 or 11 can optionally include that the control unit provides a suggested operation schedule for the pump based on a category of the pool device.
In Example 13, the subject matter of any one of Examples 10 to 12 can optionally include that the pool device includes a sensor for sensing one or more physical properties of fluid flowing through the housing and a chemical dispenser for dispensing one or more chemicals into the fluid flowing through the housing.
In Example 14, the subject matter of Example 13 can optionally include that the sensor detects or measures one or more of an oxidation-reduction potential value, a pH value, a temperature value, a calcium hardness value, a total alkalinity value, a cyanuric acid value, a total dissolved solids value, a salinity value, a free chlorine value, or a total chlorine value.
Example 15 is a water chemistry device included in a modular pool pad. The water chemistry device may include a control unit; an inlet port; an outlet port; a sensor fluidly coupled to the inlet port and the outlet port and communicatively coupled to the control unit, the sensor designed to sense one or more of an oxidation-reduction potential value, a pH value, a temperature value, a calcium hardness value, a total alkalinity value, a cyanuric acid value, a free chlorine value, or a total chlorine value; and a chemical dispensing apparatus fluidly coupled to the inlet port and the outlet port, the chemical dispensing apparatus communicatively coupled to the control unit.
In Example 16, the subject matter of Example 15 can optionally include that the integrated water chemistry device further includes a filter having a filter housing in communication with the inlet port and the outlet port.
In Example 17, the subject matter of Example 16 can optionally include that the sensor and the chemical dispensing apparatus are contained within the filter housing.
In Example 18, the subject matter of Example 16 can optionally include that the sensor and the chemical dispensing apparatus are joined to one of the inlet port or the outlet port on an outside of the filter housing.
In Example 19, the subject matter of any one of Examples 15 to 18 can optionally include that the sensor comprises a colorimeter configured to measure one or more of the calcium hardness value, the total alkalinity value, the cyanuric acid value, the free chlorine value, or the total chlorine value.
In Example 20, the subject matter of any one of Examples 15 to 19 can optionally include that the chemical dispensing apparatus includes a chemical brick storage and a chemical brick feeder.
In Example 21, the subject matter of Example 20 can optionally include that the chemical brick storage and the chemical brick feeder comprise a multi-channel brick feeding system.
In Example 22, the subject matter of any one of Examples 20 or 21 can optionally include that each of a plurality of chemical bricks in the chemical brick storage include an identification element.

The previous description of the disclosed embodiments is provided to enable any person skilled in the art to make or use the invention. Various modifications to these embodiments will be readily apparent to those skilled in the art, and the generic principles defined herein may be applied to other embodiments without departing from the spirit or scope of the invention. Thus, the invention is not intended to be limited to the embodiments shown herein but is to be accorded the widest scope consistent with the principles and novel features disclosed herein.

## Claims

1. An integrated pool pad system, comprising:
a housing having an inlet port, an outlet port, and a power distributor, the inlet port and the outlet port in communication with a body of water;
a pump contained within the housing and in fluid communication with the inlet port and the outlet port;
a filter contained within the housing and in fluid communication with the inlet port and the outlet port; and
a control unit configured to control operation of the pump, the control unit including a user interface.

2. The integrated pool pad system of claim 1, further comprising:
a strainer coupled to the inlet port and a strainer compartment integrated with the housing,
wherein the strainer is separately accessible from the pump and the filter.

3. The integrated pool pad system of any one of claims 1 or 2, further comprising at least one automated valve in communication with the control unit, the control unit designed to open and close the at least one automated valve to backwash the filter.

4. The integrated pool pad system of any one of claims 1 to 3, wherein the housing includes an access panel, the power distributor is provided in the form of a load center, and the load center is accessible from outside of the housing via the access panel.

5. The integrated pool pad system of any one of claims 1 to 4, wherein the inlet port receives water from one or more bodies of water and the outlet port distributes water to the one or more bodies of water.

6. The integrated pool pad system of any one of claims 1 to 5, further comprising sound-absorbing panels positioned within the housing.

7. The integrated pool pad system of any one of claims 1 to 6, wherein the housing is at least partially recessed into a ground surface.

8. The integrated pool pad system of any one of claims 1 to 7, wherein the user interface is provided on a remote control device.

9. The integrated pool pad system of any one of claims 1 to 8, wherein an external pool device is electrically coupled to the power distributor.

10. The integrated pool pad system of any one of claims 1 to 9, wherein the housing is designed to modularly receive a pool device such that the pool device is fluidly coupled to the inlet port and the outlet port, and the pool device is electrically coupled to the power distributor.

11. The integrated pool pad system of claim 10, wherein the pool device is one or more of a water chemistry sensor, a chemical dispenser, a heater, or a booster pump.

12. The integrated pool pad system of any one of claims 10 or 11, wherein the control unit provides a suggested operation schedule for the pump based on a category of the pool device.

13. The integrated pool pad system of any one or claims 10 to 12, wherein the pool device includes:
a sensor for sensing one or more physical properties of fluid flowing through the housing and a chemical dispenser for dispensing one or more chemicals into the fluid flowing through the housing.

14. The integrated pool pad system of claim 13, wherein the sensor detects or measures one or more of an oxidation-reduction potential value, a pH value, a temperature value, a calcium hardness value, a total alkalinity value, a cyanuric acid value, a total dissolved solids value, a salinity value, a free chlorine value, or a total chlorine value.
